# EUROPEAN PATENT APPLICATION

(11) **EP 4 768 452 A1**
(43) Date of publication of application: **01.07.2026**
(21) Application number: 24223145.4
(22) Date of filing: 24.12.2024
(51) Int. Cl.: C02F 3/14, C02F 3/20

(54) **METHOD TO INCREASE THE OXYGEN LEVEL IN OXYGEN DEFICIENT OR DEPLETED WATER BODIES OR WATER BODIES THAT WILL FACE OXYGEN DEFICIENCY OR DEPLETION IN THE FUTURE**

(71) Applicant: Yara International ASA, 0277 Oslo (NO)
(72) Inventor: Wassmann, Hartmut, 16556 Hohen Neuendorf (DE); Klemz, Roman, 13435 Berlin (DE); Kosmac, Udo, 46519 Alpen (DE); Hilmers, Jan, 0277 Oslo (NO)
(74) Representative: De Clercq & Partners

(57) **Abstract**

The present disclosure relates to a method and a system to increase the dissolved oxygen content in a water body having a dissolved oxygen content of between 0 mg/l and 4 mg/l, or to anticipate a future drop of a dissolved oxygen content of a water body to between 0 mg/l and 4 mg/l, wherein the water body is non-stratified, or is stratified and comprises at least an epilimnion, wherein the method comprises a step a, wherein a stream of diluted aqueous nitrate containing liquid droplets of which at least part are diluted oxygenated aqueous nitrate containing liquid droplets are formed, and a subsequent step b, wherein the diluted aqueous nitrate containing liquid droplets of which at least part are oxygenated diluted aqueous nitrate containing liquid droplets are further spread, in case of a non-stratified water body, in a part of the water body or in the whole water body, and in case of a stratified water body, in a part of the epilimnion of the water body or in the whole epilimnion of the water body.

## Description

### Technical field

The present disclosure relates to the increase of the oxygen level in oxygen deficient or oxygen depleted water bodies or in water bodies that in the future will face an oxygen deficiency or depletion.

### Background

Oxygen deficiency in water bodies - also known as hypoxia or when there is a significant decrease in the dissolved oxygen content (oxygen level) in the water body -, or anoxia - when there is no oxygen present in the water body or in other words when the water body is depleted of dissolved oxygen-, can occur across a variety of aquatic ecosystems.

Still waters and certain sections of slow flowing waters (such as parts of a river or a canal) are particularly susceptible to oxygen deficiency or depletion due to eutrophication. Additionally, point source pollution (i.e., a single identifiable source of water pollution such as a road runoff or a discharge of a waste water plant), and diffuse source pollution (i.e., the release of potential pollutants from various activities), triggered by amongst others atmospheric deposition, certain farming practices leading to amongst others runoff from agricultural lands, the natural entry of organic materials, etc. play also a significant role.

Urban waters often experience oxygen deficiency since these are burdened by external nutrient sources, consumptive and pollutants produced by external sources of nutrients, which consume oxygen resources through biochemical degradation processes and increased biological oxygen demand (BOD).

Oxygen deficiency and depletion is frequently characterized by increased plant growth, including high activity of algae. Rooted plants will provide shade and cover for a wide range of aquatic species. All green plants, including algae, photosynthesize in daylight hours during their growth period and respire at all times. During the day, the plant absorbs carbon dioxide (CO₂) from the water which is converted into carbohydrate producing dissolved oxygen which is released into the water. When plant growth is active, these photosynthetic processes supersede respiration, through which dissolved oxygen is absorbed and carbon dioxide is released. As a result, the pH of the water is raised during daytime as the amount of carbonic acid (H₂CO₃) is reduced. Also the dissolved oxygen concentrations raise during the day. At night however, oxygen is consumed by the plants such that the level of carbon dioxide increases, leading to a lower pH, and the level of dissolved oxygen drops down significantly.

It is furthermore remarked that oxygen deficiency and depletion in urban waters and aquaculture, stems from the continuous oxygen consumption by bacteria and the nighttime respiration of phytoplankton. Unlike during daylight hours, when photosynthesis generates oxygen, these processes consume or even deplete oxygen levels around the clock, with significant drops occurring at night when photosynthetic oxygen production ceases, while oxygen consumption continues.

Furthermore, when there are many reducing substances in the water of the water body such as hydrogen sulphide (H₂S), ammonia (NH₃), nitrite (NO₂), the oxidation also consumes a lot of oxygen.

Oxygen deficiency and depletion are a primary cause of mass fish mortality in urban waters and aquaculture environments. This is due to the critical reliance of fish on oxygen to efficiently convert feed into essential energy and biomass. A lack of oxygen will slow down the metabolism of fish, leading to decreased growth, decreased appetite, and decreased overall health. Low oxygen levels can lead to an overly acidic environment, which can be toxic to fish and other aquatic life.

Fish mortality gets even worse during summertime when temperatures are elevated. Higher temperatures are not only in favour for biomass production through algae, but are also in favour of oxygen depletion activities by bacteria. Consequences thereof are on the one hand dead fish in case the oxygen level, mostly at night, where the oxygen produced during the day is consumed again, but possibly in some cases also during day time, when the oxygen level drops at a certain moment to 0 mg oxygen / litre water. Such periods of high oxygen deficiency or oxygen depletion, triggers a massive loss of the oxygen-dependent fish population. When there is an oxygen deficiency or depletion, massive fish kills can occur in very short time periods. Another consequence of oxygen deficiency and depletion is the formation of odour originating from anaerobic processes somewhere in the water body, but mostly in the sediment of the water body. Odour typically is in gaseous form, which gas rises up from the sediment to the water surface of the water body and then dissolves in the air above the water surface resulting in the ability of human to sense a bad smell. Anaerobic processes always happen in the major part of water bodies. However, when there is sufficient oxygen present, the odorous gases will be oxidized and will not produce a bad smell, while if there is oxygen deficiency or depletion in the water body, these gases will not be oxidized and humans will be able to smell the bad odour. The area where bad odour in general is firstly produced is at the border of the water body, while the centre of the water body still can have sufficient oxygen left. A typical example of a bad odour is the smell coming from hydrogen sulphide (H₂S). If bacterial degradation processes based on sulphate, also called desulphurization, have already started, the formation of hydrogen sulphide worsens the fish kill even more. The same effect is obtained with ammonia and nitrite. Hydrogen sulphide and ammonia are furthermore known to be fish toxins.

In urban areas, urban water bodies such as lakes, ponds, and canals, often receive heavily laden stormwater runoffs which are channelled through the urban drainage systems and which are discharged in the urban water bodies with little to no treatment. This can lead to a sudden increase in oxygen demanding substances, including organic materials, chemicals, and nutrient such as nitrogen and phosphorus. The entry of these oxygen demanding substances in the urban water bodies spontaneously increases the bacterial activity that decompose these oxygen demanding substances into inorganic minerals, also called 'bacterial mineralization', which is a process that intensively consumes oxygen and rapidly depletes the dissolved oxygen in the water body. Particularly after heavy rainfall events, especially in the summer months, when large volumes of untreated road runoff enter warmed up waters, an abrupt drop of the oxygen levels, even within a couple of hours, can occur. Although the phytoplankton in these water bodies can produce oxygen through photosynthesis, in normal circumstances increasing the amount of dissolved oxygen in the water body, this effect is frequently exceeded or even undone by the rapid consumption of the oxygen dissolved in the water body by the bacteria, leading to a net oxygen deficit resulting in hypoxic or even anoxic water bodies. Aquatic organisms such as fish which rely on a sufficient oxygen level to survive are in this way impaired or even perished.

The commonly known approach to increase the oxygen level in a water body is to add atmospheric air to the water body, for instance by aerating the water body. Aeration can be done in various forms and technical designs such as air or oxygen pumps, aerators, fountains, etc. This approach however has very narrow physical limits, especially at high temperatures. Its use is amongst others limited due to the limited solubility of atmospheric oxygen in water, especially in warmer water. The oxygen introduced in this way in the water body is immediately consumed again by the bacteria. This solution thus only provides in short-term recovery of the affected water bodies and not in a sustainable way to improve the oxygen levels of the water bodies with aquatic life. Furthermore, depending on the technical design, this solution could even lead to undesired opposite effects, in which the oxygen deficiency or depletion is increased by hydraulic mobilization of the water body, leading to intensified oxygen deficiency periods afterwards.

The goal of the present disclosure is consequently to provide in a more efficient method with results on a longer term to prevent or reduce fish kill in case there is an oxygen deficiency or depletion in a water body or in case an oxygen deficiency or depletion will occur in the near future.

### Summary

According to an aspect of the present disclosure, a method to increase the dissolved oxygen content in a water body having a dissolved oxygen content of between 0 mg/l and 4 mg/l, or to anticipate a future drop of a dissolved oxygen content of a water body to between 0 mg/l and 4 mg/l, wherein the water body is non-stratified, or is stratified and comprises at least an epilimnion, wherein the method comprises the following steps:
- step a, wherein a stream of diluted aqueous nitrate containing liquid droplets of which at least part are diluted oxygenated aqueous nitrate containing liquid droplets are formed, and
- step b, wherein the diluted aqueous nitrate containing liquid droplets of which at least part are oxygenated diluted aqueous nitrate containing liquid droplets are further spread, in case of a non-stratified water body, in a part of the water body or in the whole water body, and in case of a stratified water body, in a part of the epilimnion of the water body or in the whole epilimnion of the water body.

In the light of the present disclosure, the term "oxygenated droplets" means that the droplets contain dissolved oxygen.

It has surprisingly been discovered by the applicant that, when a combination of nitrate and oxygen is present in a water body, the nitrate in the present disclosure being in the form of a non-natural source of nitrate which is added to the water body, and the oxygen either originating from biogenic or other natural sources, or being added to the water body in case the biogenic or other natural sources insufficiently provides oxygen in the water body, the bacteria present in the water body will not immediately switch back to consuming the oxygen in the water body but will first consume the nitrate instead to produce their energy for respiration. In this way, the bacterial oxygen consumption is considerably reduced without the bacterial processes themselves coming to a standstill. This leads to a substantial relief of the oxygen supply for amongst others the fish living in the water body. Furthermore, it has been surprisingly observed by the applicant that not only an acute threat of fish mortality is averted, but also the oxygen supply to the water body is improved for a longer period of time. It has further been observed that, by applying the method according to the present disclosure, the danger posed by *Clostridium Botulinum,* an obligate anaerobe bacterium that thrives under low-oxygen conditions and produces a potent neurotoxin, is addressed. This toxin not only poses a lethal threat to aquatic fauna but also carries significant risks for waterfowl and mammals that come into contact with fresh water contaminated by this toxin. The method according to the present disclosure thus effectively prevents the formation of anaerobic conditions under which *Clostridium Botulinum* could proliferate, in this way significantly minimizing the risk of botulinum toxin poisoning.

It can thus be summarized that in general, the method according to the present disclosure frames within the comprehensive consideration of ecosystem health by offering a strategic solution to prevent ecological disasters caused by oxygen deficiency or depletion and the resultant secondary effects thereof.

The method according to the present disclosure furthermore takes care that the nitrate is dispersed in the water body within minutes, which is crucial for the intended effect as disclosed above.

Another important advantage of the method above is that aqueous nitrate containing liquid is easy to store and is readily available to be applied whenever it is necessary. It is also important to note that the aqueous nitrate containing liquid is not hazardous for humans and the environment.

In a particular method according to the present disclosure, the aqueous nitrate containing liquid is chosen from aqueous calcium, sodium, potassium, ammonium, magnesium or barium nitrate solution, or any combination thereof.

It is remarked that the primary component of interest is the anion nitrate rather than the accompanying cation. However, the critical factor remains the rapid dissolution and distribution of the nitrate in the water body for optimal effectiveness. For instance, the possible nitrate concentration in an aqueous calcium nitrate solution is higher than in an aqueous sodium nitrate solution. Using calcium nitrate is thus advantageous in view of using sodium nitrate since an aqueous calcium nitrate solution can be transported in smaller nitrate storage tanks than for instance aqueous sodium nitrate solutions.

In a particular method according to the present disclosure, step a comprises the following sub steps:
- diluting an aqueous nitrate containing liquid with dilution water, thereby forming a diluted aqueous nitrate containing liquid;
- converting the diluted aqueous nitrate containing liquid into a stream of diluted aqueous nitrate containing liquid droplets, and

Optionally, oxygen is added to the stream of diluted aqueous nitrate containing liquid droplets, thereby forming a stream of diluted aqueous nitrate containing liquid droplets of which at least part are oxygenated diluted aqueous nitrate containing liquid droplets.

In a possible method according to the present disclosure, step a comprises the following sub steps:
- diluting an aqueous nitrate containing liquid with dilution water, thereby forming a diluted aqueous nitrate containing liquid;
- converting the diluted aqueous nitrate containing liquid into a stream of diluted aqueous nitrate containing liquid droplets, and

Optionally, oxygen is added to the stream of diluted aqueous nitrate containing liquid droplets, thereby forming a stream of diluted aqueous nitrate containing liquid droplets of which at least part are oxygenated diluted aqueous nitrate containing liquid droplets.

In an optional method according to the present disclosure, step a comprises the following sub steps:
- converting an aqueous nitrate containing liquid into a stream of aqueous nitrate containing liquid droplets;
- diluting the stream of aqueous nitrate containing liquid droplets with dilution liquid, more in particular dilution water, thereby forming a stream of diluted aqueous nitrate containing liquid droplets;

Optionally, oxygen is added to the stream of diluted aqueous nitrate containing liquid droplets, thereby forming diluted aqueous nitrate containing liquid droplets of which at least part are oxygenated diluted aqueous nitrate containing liquid droplets.

In a possible method according to the present disclosure, step a comprises the following sub steps:
- diluting an aqueous nitrate containing liquid with dilution liquid, more in particular water, and simultaneously adding oxygen, forming an oxygenated diluted aqueous nitrate containing liquid,
- converting the oxygenated diluted aqueous nitrate containing liquid into a stream of diluted aqueous nitrate containing liquid droplets of which at least a part are oxygenated diluted aqueous nitrate containing liquid droplets.

In a possible method according to the present disclosure, step a comprises the following sub steps:
- adding oxygen to a dilution liquid, more in particular dilution water, forming oxygenated dilution liquid, more in particular oxygenated dilution water,
- converting the oxygenated dilution liquid, more in particular the oxygenated dilution water, into a stream of dilution liquid droplets, more in particular a stream of dilution water droplets, of which at least part are oxygenated dilution liquid droplets, more in particular oxygenated dilution water droplets,
- adding aqueous nitrate containing liquid to the stream of dilution liquid droplets, more in particular oxygenated dilution water droplets, and oxygenated dilution liquid droplets, more in particular oxygenated dilution water droplets, thereby forming a stream of diluted aqueous nitrate containing liquid droplets of which at least part are oxygenated diluted aqueous nitrate containing liquid droplets.

In a possible method according the present disclosure, step a comprises the following sub steps:
- converting dilution liquid, more in particular dilution water, to a stream of dilution liquid droplets, more in particular dilution water droplets;
- adding aqueous nitrate containing liquid and simultaneously adding oxygen to the stream of dilution liquid droplets, more in particular the stream of dilution water droplets, forming a stream of diluted aqueous nitrate containing liquid droplets of which at least part are oxygenated diluted aqueous nitrate containing liquid droplets.

In a particular method according to the present disclosure, the conversion of a respective liquid into a stream of liquid droplets is done by increasing the velocity of the respective liquid to such a speed that the stream of liquid droplets is formed.

In a possible method according to the present disclosure, the velocity of the respective liquid is increased by passing the liquid through a nozzle or jet which subsequently ejects the stream of liquid droplets.

In a specific method according to the present disclosure, the water body has a water surface, wherein the at least one nozzle or jet can be placed above the water surface oriented in an upward direction, more in particular an oblique upward direction, in view of the water surface, wherein during the operation of the system, the respective liquid enters the nozzle or jet which subsequently ejects a stream of liquid droplets up into the atmosphere, more in particular in a direction which is the same as the direction in which the at least one nozzle or jet is oriented, whereafter the droplets drop down towards the water surface and finally end in the water body because of gravity, or in a downward direction, more in particular an oblique downward direction, in view of the water surface, wherein during operation of the system, the respective liquid enters the nozzle or jet which subsequently ejects a stream of liquid droplets in the atmosphere towards the water surface, more in particular in a direction which is the same as the direction in which the at least one nozzle or jet is oriented, and finally ends in the water body, wherein during the movement of the liquid droplets through the atmosphere at least part of these entrain atmospheric air thus resulting in liquid droplets of which at least part are oxygenated liquid droplets. The nozzle or jet can also be placed below the water surface oriented in a downward direction, more in particular an oblique downward direction, wherein during operation of the system the respective liquid enters the nozzle or jet which subsequently ejects a stream of liquid droplets in a downward direction, more in particular in the same direction as the direction in which the at least one nozzle or jet is oriented, in the water body, wherein in case the oxygen activity of the biogenic or other natural sources in the water body is sufficient to provide in a dissolved oxygen content in the water body of more than 4 mg/l water, at least part of the stream of liquid droplets are oxygenated liquid droplets, and in case the oxygen activity of the biogenic or other natural sources in the water body is insufficient to provide in a dissolved oxygen content in the water body of more than 4 mg/l water, additional oxygen is added to the stream of liquid droplets, thereby forming a stream of liquid droplets of which at least part are oxygenated liquid droplets.

In a possible method according to the present disclosure, the velocity of the respective liquid is increased by passing the respective liquid through an impeller or a propeller with a plurality of impeller vanes each comprising an impeller / propeller blade face and an impeller / propeller blade back, wherein the impeller vanes / propeller blades during operation of the system are rotated by a motor thereby exercising a positive pressure on the impeller blade face of each of the impeller vanes creating a pressure side, through which a negative pressure is obtained on the impeller / propeller blade back of each of the impeller vanes / propeller blades creating a suction side, wherein at the pressure side the respective liquid is broken up in the stream of liquid droplets, wherein the motor more in particular has an axle onto which the impeller / propeller is mounted, wherein the water body has a water surface, and wherein the impeller with the impeller vanes more in particular is submersed in the water body either close to the water surface thereby creating liquid droplets in the water body close to the water surface of which at least part entrain atmospheric air from the atmosphere present above the water surface in the vicinity thereof, or at a depth in the water body where the droplets created in the water body are not able to entrain atmospheric air, wherein in case the oxygen activity of the biogenic or other natural sources in the water body is sufficient to provide in a dissolved oxygen content in the water body of more than 4 mg/l water, at least part of the liquid droplets entrain dissolved oxygen from the water body, and in case the oxygen input from biogenic or other natural sources in the water body results in an dissolved oxygen content of the water body of between 0 mg/l and 4 mg/l water, oxygen is added to the respective liquid, in both cases resulting in a stream of liquid droplets of which at least part are oxygenated liquid droplets.

In a specific method according to the present disclosure, the oxygen is added to a respective liquid by adding atmospheric air to it.

In a possible method according to the present disclosure, in case an impeller / propeller is used to increase the velocity of a respective liquid, the atmospheric is added to the respective liquid by placing an atmospheric air supply tube comprising an atmospheric air inlet in the atmosphere, and comprising an atmospheric air outlet at the suction side of the impeller / propeller, wherein during operation of the system atmospheric air is sucked in the atmospheric air supply tube through the atmospheric inlet and is ejected out of the atmospheric air supply tube through the atmospheric outlet in the water body at the suction side of the impeller / propeller .

The method according to the present disclosure is more in particular to increase the dissolved oxygen content of a water body having an dissolved oxygen content of between 0 mg/l and 2 mg/l, or to anticipate a future drop of the dissolved oxygen content of a water body to an dissolved oxygen content of between 0 mg/l and 2 mg/l.

In a specific method according to the present disclosure, the aqueous nitrate containing liquid has a nitrate concentration of between 5 wt.% and 99 wt.%, or between 30 wt.% and 83 wt.%, or between 35 wt.% and 75 wt.%, or between 40 wt.% and 55 wt.%,, wherein the nitrate concentration depends on the type of nitrate salt used.

Most in particular, the aqueous nitrate containing liquid is a concentrated aqueous calcium nitrate solution, having a concentration of calcium nitrate of between 5 and 55 wt.%, or between 40 wt.% and 50 wt.% or between 42 wt.% and 48 wt.%.

In a particular method according to the present disclosure, the method comprises the steps of
- measuring the dissolved oxygen content in the water body, and/or
- measuring the nitrate content in the water body.

More in particular, one or more of the sensors are configured to work in a continuous way.

Optionally, one or more of the sensors are configured to transmit sensed data online.

More in particular, one or more of the sensors are controllable by a control device which is configured to automatically add the aqueous nitrate containing liquid to the appropriate nitrate supply spot by means of the one or more nitrate supply tubes, in case the dissolved oxygen content and/or the nitrate content drops below a pre-determined critical level.

The temperature has an influence on the amount of oxygen that can be dissolved in the water. The higher the temperature, the less amount of oxygen that can be dissolved in the water. Temperatures of higher than 25°C give more stress to fish. The temperature can be taken into account in the prevention of the oxygen deficiency / depletion of the water body.

More in particular, to measure the oxygen, an oxygen sensor is used, to measure the nitrate, a nitrate sensor is used an to measure the temperature of the water body, a temperature sensor is used.

In a possible method according to the present disclosure, the method is used to prevent or reduce fresh water fish mortality.

In another possible method according to the present disclosure, the method is used for prevention or reduction of production of odour of the water body. More in particular, the method according to the present disclosure is used to prevent or reduce the production of hydrogen sulphide (H₂S) in the water body.

According to a second aspect of the present disclosure, a system to increase the oxygen level in a water body having an dissolved oxygen content of between 0 mg/l and 4 mg/l, or to anticipate a future drop of an dissolved oxygen content of a water body to a content of between 0 mg/l and 4 mg/l, more in particular to increase the dissolved oxygen content of a water body having an dissolved oxygen content of between 0 mg/l and 2 mg/l, or to anticipate a future drop of the dissolved oxygen content of a water body to a content of between 0 mg/l and 2 mg/l, wherein the water body is non-stratified, or stratified and comprises at least an epilimnion, when mounted, comprising
- at least one nitrate storage tank configured to hold an aqueous nitrate containing liquid,
- at least one nitrate supply tube which is in liquid communication with the nitrate storage tank, more in particular by means of an openable and closable valve, wherein the valve more in particular is connected to a dosing pump which is configured to control the amount of aqueous nitrate containing liquid flowing out of the nitrate storage tank(s) if the valve is in an open position, wherein the at least one nitrate supply tube is configured to supply the aqueous nitrate containing liquid to an appropriate nitrate supply spot,
- a dilution system which is configured to take in dilution water and to deliver the dilution water to an appropriate dilution spot,
- a liquid droplet creating system which is configured to create a stream of liquid droplets out of a respective liquid, and
- a diffusing component which is configured to diffuse and spread the droplets, in case of a non-stratified water body, in a part of the water body or the whole water
body, and in case of a stratified water body, in a part of the epilimnion of the water body of the whole epilimnion of the water body.

The advantage of using the system according to the present disclosure as described above is that a movement in the water body is created, resulting in an efficient and quick distribution of the aqueous nitrate containing liquid throughout the respective part of the water body.

Optionally, an aeration system which is configured to add oxygen to an appropriate liquid at an appropriate aeration spot by aeration of the liquid with atmospheric air, the aeration system more in particular comprising one or more air supply tubes each comprising an air inlet which is configured to suck in atmospheric air, and an air outlet which is configured to be located at an appropriate aeration spot and to eject the atmospheric air at the appropriate aeration spot.

The aeration system more in particular comprises one or more pumps which are configured to pump atmospheric air in the air inlet of each of the air supply tubes and to pump the atmospheric air out of the air outlet of the air supply tubes at the appropriate aeration spot, or the submersed rotatable impeller / propeller comprising the plurality of impeller vanes / propeller blades, wherein the aeration spot is located at the suction side of the impeller vanes / propeller blades, and wherein during the rotational movement of the impeller vanes / propeller blades in the appropriate liquid, atmospheric air is sucked in the air inlet of each of the air supply tubes and is ejected out of the outlet inlet of each of the air supply tubes at the suction side of the impeller vanes / propeller blades.

The liquid droplet creating system more in particular is configured to increase the velocity in the respective liquid.

The liquid droplet creating system more in particular comprises one or more nozzles or jets which are configured to pass the liquid through it and to eject the liquid in the form of a stream of liquid droplets, wherein the ejection of the liquid out of the nozzle(s) or jet(s) increases the velocity of the liquid resulting in the breaking of the liquid into liquid droplets, or a submersed impeller / propeller which is rotatable by a motor and which comprises a plurality of impeller vanes / propeller blades which each comprise an impeller / propeller blade face and an impeller / propeller blade back, wherein during operation of the system, the impeller vanes / propeller blades rotate in the liquid obtaining a positive pressure on the impeller / propeller blade face of each of the impeller vanes / propeller blades creating a pressure side, and obtaining a negative pressure on the impeller / propeller blade back of each of the impeller vanes / propeller blades creating a suction side, wherein at the pressure side, through which the velocity of the liquid is increased since it is sucked from the pressure side to the suction side of the impeller vanes / propeller blades resulting in the breaking of the liquid in the stream of liquid droplets.

The system according to the present disclosure is more in particular configured to increase the dissolved oxygen content of a water body having an dissolved oxygen content of between 0 mg/l and 2 mg/l, or to anticipate a future drop of the dissolved oxygen content of a water body to a content of between 0 mg/l and 2 mg/l.

The at least one nitrate supply tube which is in liquid communication with the nitrate storage tank is more in particular controllable by means of an openable and closable valve.

Even more in particular, the valve can be connected to a dosing pump which is configured to control the amount of aqueous nitrate containing liquid flowing out of the nitrate storage tanks if the valve is in an open position.

In a particular embodiment of a system according to the present disclosure, the aeration system more in particular comprises
- one or more pumps which are configured to pump atmospheric air in the air inlet of each of the air supply tubes and to pump the atmospheric air out of the air outlet of the air supply tubes at the appropriate aeration spot, or
- the submersed rotatable impeller / propeller comprising the plurality of impeller vanes / propeller blades, wherein the aeration spot is located at the suction side of the impeller vanes / propeller blades, and wherein during the rotational movement of the impeller vanes / propeller blades in the appropriate liquid, atmospheric air is sucked in the air inlet of each of the air supply tubes and is ejected out of the outlet inlet of each of the air supply tubes at the suction side of the impeller vanes / propeller blades.

In an optional embodiment of a system according to the present disclosure, the system comprises
- a nitrate sensor to measure the nitrate concentration in the water body, and/or
- an oxygen sensor to measure the oxygen concentration in the water body, and/or
- a temperature sensor to measure the temperature of the water body.

In a specific embodiment of a system according to the present disclosure, one or more of the sensors are controllable by a control device which is configured to automatically add the aqueous nitrate containing liquid to the appropriate nitrate supply spot using the at least one nitrate supply tube, in case the dissolved oxygen content and/or the nitrate content drops below a pre-determined critical level.

More in particular, one or more of the sensors are configured to work in a continuous way.

Optionally, one or more of the sensors are configured to transmit sensed data online, for instance to the control device.

### Description of the figures

FIG. 1 shows a diagram in which the evolution of the amount of dissolved oxygen expressed in mg/l water and the evolution of the amount of NO₃-N expressed in mg/litre water of the lake Klötzbecken in Berlin in the period between 17 August 2022 and 24 August 2022, as a consequence of the dosing of 1000 litres of 45 wt.% of an aqueous calcium nitrate solution in the lake,
FIG. 2 shows the evolution of the dissolved oxygen-content expressed in mg O₂/litre water and the decrease of NO₃-N expressed in mg NO₃-N per litre water of the lake Klötzbecken in the weeks after the treatment of the lake in the period as indicated in Figure 1,
FIG. 3 shows a depth chart from lake Schäfersee in which a system according to the present disclosure using different Turbo-Jets is applied,
FIG. 4 shows the dissolved oxygen levels in relation to precipitation data in the Schäfersee,
FIG. 5 shows a first example of a system according to the present disclosure using a Turbo-Jet aerator,
FIG. 6 shows a second example of a system according to the present disclosure using two Aqua-Pilz aerators,
FIG. 7a shows a third example of a system according to the present disclosure using a submersed jet aerator system;
FIG. 7b shows a first embodiment of a jet of a submersed jet aerator system according to the present disclosure as shown in Figure 7a;
FIG. 7c shows a second embodiment of a jet of a submersed jet aerator system according to the present disclosure as shown in Figure 7a;
FIG. 7d shows a third embodiment of a jet of a submersed jet aerator system according to the present disclosure as shown in Figure 7a;
FIG. 8 shows a fourth example of a system according to the present disclosure using a surface jet aerator;
FIG. 9 shows a JETLIM^{®} aerator system which is applicable in a fifth example of a system according to the present disclosure,
FIG. 10 shows a sixth example of a system according to the present disclosure using the propeller of a motor-driven boat,
FIG. 11 shows a seventh example of a system according to the present disclosure using a ship with water cannons.

### Detailed description

The method according to the present disclosure relates to increasing the oxygen level in a water body having a dissolved oxygen content of between 0 mg/l and 4 mg/l, or anticipating a future drop of a dissolved oxygen content of a water body to a content of between 0 mg/l and 4 mg/l. More in particular, the method according to the present disclosure relates to the increase of the dissolved oxygen content of a water body having a dissolved oxygen content of between 0 mg/l and 2 mg/l, or to anticipate a future drop of the dissolved oxygen content of a water body to a content of between 0 mg/l and 2 mg/l. In the context of the present disclosure, an oxygen deficient water body is a water body having a dissolved oxygen content of between 0 mg/l and 4 mg/l, more in particular between 0 mg/l and 2 mg/l, while an oxygen depleted water body has a dissolved oxygen content of 0 mg/l.

With water bodies are meant rivers, lakes, ponds, canals and others. The water body can be either non-stratified or stratified. In case of a stratified water body, the water body at least comprises an epilimnion. Stratification of water is a common natural phenomenon and often occurs in water bodies at middle to high latitudes, where the effect of temperature differences is sufficient to overcome the natural mixing process in the summer. A sharp temperature gradient separates the readily miscible surface water from deeper bottom water. These water bodies are divided into three layers at different temperatures, i.e. epilimnion, thermocline and hypolimnion layers. The depth of the epilimnion can vary significantly on the size and other morphometric date of the water body and the amount and the depth of the atmospheric air mixed into the water body. A shallow water body is in general a non-stratified water body, but where the oxygen level decreases from surface to the bottom. In shallow water bodies such as shallow lakes and shallow ponds, the method according to the present application is applicable to substantially the whole water body.

The method according to the present disclosure is typically applicable to fresh water bodies, but can also be applied to salt water bodies.

Furthermore, the method according to the present disclosure is also applicable to aquaculture, which is defined as the controlled cultivation or farming of aquatic organisms such as amongst others fish. Examples thereof are fish farms including but not limited to fish tanks, RAS (Recirculating Aquaculture Systems), etc. Poor water quality in fish farms can lead to diseases like fin and tail rot, which are more likely to occur when oxygen levels are low.

In general, fish require dissolved oxygen contents between 5 and 6 parts per million (ppm or mg oxygen / liter of water) to thrive and survive. When the dissolved oxygen content (level) drops below 3 ppm, fish become stressed, and if the content drops below 2 ppm, some fish species may start to die. Other fish can still survive, but will definitely get into trouble. In case of an oxygen depleted water body, no fish can survive. Factors affecting the dissolved oxygen level can be summarized as follows:
- dissolved oxygen decreases with increasing water temperature and salinity. Barometric pressure variations however have minor effects on the dissolved oxygen concentration.
- at higher elevations, dissolved oxygen solubility decreases due to lower atmospheric pressure,
- dissolved oxygen concentration increases with water depth due to hydrostatic pressure.

In the table 1 below, the minimum amount of dissolved oxygen of some fish species to live is given. It is remarked that the minimum dissolved oxygen content for the survival of fish is relatively difficult to determine since it depends from a lot of factors such as the water temperature, the partial oxygen pressure, the speed of the oxygen change, the acclimatization of the animals and any burdens.

**Table 1:overview minimum oxygen requirement for a number of fish species to survive (source: SenMVKU (2024) Fische in Berlin, Bilanz der Artenvielfalt 2023))**

| Fish species | Oxygen requirement (mg/l of water) | Fish species | Oxygen requirement (mg/l of water) | Fish species | Oxygen requirement (mg/l of water) |
|---|---|---|---|---|---|
| Eel | 0.4 - 0.8 | Gudgeon | 1.6 - 2.0 | Rainbow trout | 2.7 - 3.7 |
| Aland | 0.8 | Bream (peek) | 0.8 - 1.3 | Rudd | 0.4 |
| Brook trout | 2.0 - 3.6 | Hazel | 1.6 | Mud whipper | 0.02 |
| Perch | 0.4 - 1.2 | Pike | 0.5 - 1.6 | Trench | 0.4 |
| Bitterling | 0.6 - 0.8 | Crucian carp | 0.01 | Siberian sturgeon | 2.0 - 2.4 |
| Lead | 0.6 - 1.1 | Carp | 0.8 - 1.0 | Sunfish | 0.9 - 3.1 |
| Chub | 1.1 | Tadfish | 0.8 - 1.2 | Smelt | 1.5 |
| Three-spined stickleback | < 2.0 | Moderlieschen | 0.5 - 0.6 | Ukelei | 1.6 |
| Trout | 2.3 - 2.8 | Nose | < 2.0 | (European) Catfish | 0.5 - 0.6 |
| Gable | < 0.1 | Roach | 1.2 | Slender | 0.8 - 1.9 |
| Goldfish | < 0.1 | Burbot | 1.4-2.0 | Pike-perch | < 2.0 |
| Grass carp | 0.2 - 0.6 | Asp | 2.0 | | |

Possible triggers to start the treatment of a water body to increase the oxygen level to restore the water body can be:
- a one-time observed massive fish kill, for instance during summer time with higher temperatures after a night where the dissolved oxygen content dropped below critical dissolved oxygen levels for the fish to survive, or after a heavy rainfall, and
- a disturbing odour originating from anaerobic degradation processes of organic substances like dead fish, algae and anoxic bacteria. A typical example are sulphur reducing bacteria which produce H₂S having the "rotten egg smell".
   A possible trigger to start the treatment of a water body to increase the dissolved oxygen content to prevent a drop of dissolved oxygen in the water body can be
- a recurrent fish kill during a couple of years. In that case, the measurement of dissolved oxygen can be done via one or more sensors present in the water body,
- the visual observation that fish become stressed and begin to exhibit abnormal behaviour, such as amongst others gasping for air at the water surface, swimming slowly or even appearing lethargic, and congregating near the water surface of the water body. Additional behaviour in case of a fish farm can be fish resting on the bottom of a tank,
- increased algae growth.

The method according to the present disclosure to increase the oxygen level in a water body having a dissolved oxygen content of between 0 mg/l and 4 mg/l, or to anticipate a future drop of a dissolved oxygen content of a water body to a dissolved oxygen content of between 0 mg/l and 4 mg/l, wherein the water body is non-stratified, or is stratified and comprises at least an epilimnion comprises in essence the following two steps:
- step a, wherein a stream of aqueous nitrate containing droplets of which at least part are oxygenated aqueous nitrate containing droplets are formed, and
- step b, wherein the aqueous nitrate containing droplets of which at least part are oxygenated aqueous nitrate containing droplets are spread, in case of a non-stratified water body, in a part of the water body or in the whole water body, and in case of a stratified water body, in a part of the epilimnion of the water body or in the whole epilimnion of the water body.

A widespread misconception is the belief that the oxygen molecule bound in nitrate (NO₃⁻) can directly contribute to the oxygen supply in water bodies. This revolves around the role of nitrate and its direct contribution to oxygen supply in water bodies. Nitrate is a common inorganic ion found in water bodies, often originating from agricultural runoff, sewage, and fertilizers. It is soluble and can dissolve in water, leading to its presence in water bodies such as rivers, lakes, ponds, canals, groundwater, etc. Dissolved oxygen is crucial for aquatic life. Fish, plants and other organisms rely on it for respiration and survival. Photosynthesis by aquatic plants generates oxygen during daylight hours by using carbon dioxide (CO₂) and light energy to produce oxygen. Also diffusion from the atmosphere contributes to dissolved oxygen levels in water bodies. In fact, nitrate itself does not directly supply oxygen to aquatic organisms through which the oxygen is not directly usable for the respiration and survival of the aquatic life in the water body. On the one hand, plants in the water body use nitrate as a nitrogen source for the synthesis of amino acids which are essential for their growth. Under certain water conditions such as hypoxia, certain bacterial types switch to nitrate for their respiratory process. This process, also known as nitrate respiration or denitrification, allows these bacteria to gain energy by using nitrate instead of oxygen as the electron acceptor, reducing nitrate to nitrite (NO₂⁻) and finally to nitrogen gas (N₂). Unlike other anaerobic processes that are less energy efficient and even may produce noxious gases, a lot of bacteria prefer nitrate respiration under anaerobic conditions. It is highlighted that the oxygen atoms that are chemically released from the nitrate during the nitrate respiration or denitrification process are released in the form of water (H₂O), and are thus not directly contributing to the increase of oxygen levels in the water body.

It has now surprisingly been found that by adding a non-natural source of nitrate to the water body, in the presence of a sufficient amount of dissolved oxygen in the water body, the bacteria do not immediately switch back to consuming oxygen but consume the nitrate to produce their energy for respiration and survival. In this way, the oxygen present in the water body is more effectively utilizable by the aquatic life such as fish in the water body.

The method according to the present disclosure can more in particular be executed in different ways using different steps, as described in the following paragraphs.

In a possible method according to the present disclosure, step a comprises a sub steps of diluting an aqueous nitrate containing liquid with a dilution liquid, more in particular water from the water body that will then serve as dilution water to dilute the aqueous nitrate containing liquid (= solution), thereby forming a diluted aqueous nitrate containing liquid, and subsequently converting the diluted aqueous nitrate containing liquid into a stream of diluted aqueous nitrate containing liquid droplets.

In another possible method according to the present disclosure, step a comprises a sub step of converting an aqueous nitrate containing liquid into a stream of aqueous nitrate containing liquid droplets, and subsequently diluting the stream of aqueous nitrate containing liquid droplets with a dilution liquid, more in particular water from the water body, thereby forming a stream of diluted aqueous nitrate containing liquid droplets.

In both possible methods according to the present disclosure as described above, in case the stream of diluted aqueous nitrate containing liquid droplets does not have a sufficient dissolved oxygen content to dose it in the water body to obtain the desired dissolved oxygen content as described above, oxygen can be added to this stream of diluted aqueous nitrate containing liquid droplets, thereby forming a stream of diluted aqueous nitrate containing liquid droplets of which at least part are oxygenated diluted aqueous nitrate containing liquid droplets.

In another possible method according to the present disclosure, step a comprises a sub step of diluting an aqueous nitrate containing liquid with dilution water and simultaneously adding oxygen, forming an oxygenated diluted aqueous nitrate containing liquid, and subsequently converting the oxygenated diluted aqueous nitrate containing liquid into a stream of diluted aqueous nitrate containing liquid droplets of which at least a part are oxygenated diluted aqueous nitrate containing liquid droplets.

In another possible method according to the present disclosure, step a comprises a sub step of adding oxygen to dilution water, forming oxygenated dilution water, subsequently converting the oxygenated dilution water into a stream of dilution water droplets of which at least part are oxygenated dilution water droplets, and finally adding an aqueous nitrate containing liquid to the stream of dilution water droplets and oxygenated dilution water droplets, thereby forming a stream of diluted aqueous nitrate containing liquid droplets of which at least part are oxygenated diluted aqueous nitrate containing liquid droplets.

In a possible method according to the present disclosure, step a comprises the sub steps of converting dilution water to a stream of dilution water droplets, and subsequently adding an aqueous nitrate containing liquid and simultaneously oxygen to the stream of dilution water droplets, forming a stream of diluted aqueous nitrate containing liquid droplets of which at least part are oxygenated diluted aqueous nitrate containing liquid droplets.

The water that is used as dilution water typically is water from the water body. However, in specific applications and under specific circumstances, also tap water, which is already oxygenated, or water from one or more water storage tanks could be used. The use of tap water as dilution water is particularly usable to treat small water bodies where the pressure of the tap water is sufficiently high. A possible embodiment thereof is described in more detail below.

In the possible embodiments of a method according to the present disclosure as described above, the conversion of a respective liquid into a stream of liquid droplets is more in particular done by increasing the velocity of the respective liquid to such a speed that the stream of liquid droplets is formed. Typically, the critical velocity at which for instance water begins to break up into droplets falls within the range of 10 to 20 m/s. This range can be influenced by nozzle diameter (smaller nozzles may require higher velocities to achieve droplet formation), surface tension or in other words the cohesive forces of the liquid resisting breakup into droplets, the flow rate (higher flow rates can contribute to earlier breakup of the liquid stream) and environmental factor (air resistance and turbulence can also affect the breakup point).

Depending on the type of method according to the present disclosure, the velocity of the respective liquid can be increased in different ways. A first possibility is by passing the liquid through a nozzle or jet which subsequently ejects the stream of liquid droplets. A nozzle is a device which is configured to control the direction or characteristics of a fluid flow, especially to increase velocity, as it exits the nozzle. A jet is a nozzle that ejects a fluid at high speed. The at least one nozzle or jet can furthermore be placed differently in view of the water surface of the water body. More specifically, the at least one nozzle or jet can be placed above the water surface. In that configuration, the at least one nozzle or jet can be oriented in an upward direction, more in particular an oblique upward direction, in view of the water surface. In that case, during the operation of the system, the respective liquid enters the nozzle or jet which will then subsequently eject a stream of liquid droplets up into the atmosphere. The direction in which this is done is the same as the direction in which the at least one nozzle or jet is oriented. Due to gravity, at a certain height, the created droplets will drop down towards the water surface and finally end in the water body because of gravity. Another possibility is to orient the at least one nozzle or jet in a downward direction, more in particular an oblique downward direction, in view of the water surface. In that case, during operation of the system, the respective liquid enters the nozzle or jet which subsequently ejects a stream of liquid droplets in the atmosphere towards the water surface, more in particular in a direction which is the same as the direction in which the at least one nozzle or jet is oriented. This stream of liquid droplets then finally ends in the water body. Since the at least one nozzle or jet is located above the water surface, the stream of liquid droplets will move for a while through the atmosphere before reaching the water body, through which during this movement of the liquid droplets through the atmosphere, at least part of these will entrain atmospheric air thus resulting in liquid droplets of which at least part are oxygenated liquid droplet. The at least one nozzle or jet can also be installed below the water surface, therewith being oriented in a downward direction, more in particular an oblique downward direction. In that case, during operation of the system, the respective liquid enters the nozzle or jet which subsequently will eject a stream of liquid droplets in a downward direction, more in particular in the same direction as the direction in which the at least one nozzle or jet is oriented, in the water body. In case the oxygen activity of the biogenic or other natural sources in the water body is sufficient to provide in a dissolved oxygen content in the water body of more than 4 mg/l water, at least part of the stream of liquid droplets will be oxygenated liquid droplets. However, in case the oxygen activity of the biogenic or other natural sources in the water body is insufficient to provide the required concentration of dissolved oxygen in the water body, additional oxygen will be added to the stream of liquid droplets, thereby forming a stream of liquid droplets of which at least part are oxygenated liquid droplets.

A second possibility to increase the velocity of the respective liquid is by passing the respective liquid through an impeller or a propeller with a plurality of impeller vanes, respectively propeller blades, which are submersed. An impeller in general is a rotor used to increase the pressure and flow of a fluid. It comprises a set of vanes that typically rotate within a casing. An impeller more specifically works by drawing water into a pump and then accelerating it outward through centrifugal force. The rotating impeller increases the pressure and the velocity of the water, pushing it through the pump and out of a discharge pipe. A propeller in general is a type of fan that transmits power by converting rotational motion into thrust, moving a fluid, usually water or air, in the opposite direction. It comprises several propeller blades attached to a central hub. The blades typically are designed to have an airfoil shape to maximize thrust. A propeller works by creating a thrust force that propels a vessel forward. It rotates, causing a pressure difference between the propeller blade front and the propeller blade rear surfaces. This pressure difference generates lift or thrust that pushes the water backward, which in turn propels a vessel forward.

During operation of the system, the impeller / propeller, which is more in particular mounted on the shaft (= axle) of a motor, and consequently also the impeller vanes / propeller blades, are rotated by a motor. Each impeller vane comprises an impeller vane front surface and an impeller vane rear surface. Due to rotation of the impeller, a pressure side and a suction side are created. More in particular, as the impeller rotates in the water body, the water from the water body is drawn into the center of the impeller from the pump inlet, which is referred to as the suction side because the rotation creates a low-pressure zone that "sucks" the water into the pump. The surfaces of the impeller vanes at the inlet side facing this low-pressure zone are the suction side. These surfaces are configured to guide the water smoothly into the impeller. As the water is drawn into the impeller and enters the impeller moving along the impeller vanes, the water gains kinetic energy due to the rotational motion of the impeller. The vanes subsequently forcefully direct the fluid outward toward the edges (periphery) of the impeller. This outward motion increases the velocity of the water and consequently also the pressure. The water then exits through the pump outlet, which is referred to as the pressure side due to the high-pressure zone created by the impeller's rotation. The surfaces of the impeller vanes that push the water outward towards the periphery of the impeller are considered the pressure side. These surfaces increase the velocity of the water, resulting in a higher pressure as the water exits the impeller. Each propeller blade comprises a propeller blade front surface and a propeller blade rear surface. The front surface of the propeller blades that pushes against the water, creating high pressure and thrust is called the pressure side. The rear surface of the propeller blades create a low-pressure zone, allowing the water from the water body to flow smoothly across the blade surface, and are called the suction side. By increasing the velocity of a liquid, such as water from the water body or a diluted aqueous nitrate containing liquid which is a mixture of water, for instance from the water body, and aqueous nitrate containing liquid from a nitrate storage tank, a stream of droplets can be created because of the process known as cavitation, which can occur in the following cases:
- when the velocity of the liquid increases significantly, the pressure in the liquid can drop below its vapour pressure, leading to the formation of vapour bubbles.
- high-velocity liquid flows can create turbulence, which can mix air with the liquid and form bubbles.
- fast-moving liquid can also drag air into the flow of it, especially if the surface of the liquid is exposed to the atmosphere.

The impeller / propeller can either be placed close to the water surface, thereby creating liquid droplets in the water body close to the water surface of which normally, at least part will entrain atmospheric air from the atmosphere in the vicinity of the water surface (as already indicated above). It is however also possible to place the impeller / propeller deeper in the water body where the droplets created in the water body are not able to entrain atmospheric air, wherein in case the oxygen activity of the biogenic or other natural sources in the water body is sufficient to provide in the required dissolved oxygen content in the water body, at least part of the liquid droplets will entrain dissolved oxygen from the water body, and in case the oxygen input from biogenic or other natural sources in the water body results in an insufficient dissolved oxygen content of the water body, oxygen, for instance in the form of atmospheric air, will be added to the respective liquid through which the stream of droplets will entrain added oxygen.

In case an impeller or a propeller is placed at a depth below the water surface where no atmospheric air can be entrained in the created stream of droplets from the atmosphere in the vicinity of the water surface, oxygen in the form of air can be withdrawn from an air supply, such as air from the atmosphere, through one or more air supply tubes in the water body. This is because the rear surface of the impeller vanes / propeller blades will create a low-pressure zone at the impeller vane rear surfaces / propeller blade rear surfaces as the impeller vanes / propeller blades move through the water. If an air supply tube is positioned near this low-pressure side, air can be drawn in in the water body. The air which is drawn in through the suction side of the impeller vanes / propeller blades near the low-pressure zone, or in other words in the vicinity of the impeller vane rear surfaces / propeller blade rear surfaces, will subsequently be carried along with the water of the water body and pushed out at the pressure side of the impeller vanes / propeller blades, or in other words at the impeller vane front surfaces / propeller blade front surfaces.

The same accounts for the aqueous nitrate containing solution which in this way can be withdrawn from one or more nitrate storage tanks and be dosed in the water body via one or more nitrate supply tubes, which are in liquid communication with the one or more nitrate storage tanks, in the vicinity of the impeller vane rear surfaces / propeller blade rear surfaces. In that way, the aqueous nitrate containing liquid is diluted in the water body itself, resulting in the diluted aqueous nitrate containing liquid.

Possible aqueous nitrate containing liquids (solutions) that are usable in the method according to the present disclosure comprise, but are not limited to, aqueous sodium nitrate (NaNO₃), potassium nitrate (KNO₃), ammonium nitrate (NH₄NO₃), magnesium nitrate (Mg(NO₃)₂) or barium nitrate (Ba(NO₃)₂) or any combination thereof.

The aqueous nitrate containing liquid is typically added to the water body in an amount of between 10 and 20 mg/l to be diluted in the water body using a method according to the present disclosure to reach a final target concentration of NO₃-N in the water body of between 2 and 5 mg/l.

In a specific method according to the present disclosure, the aqueous nitrate containing liquid has a nitrate concentration of between 5 wt.% and 99 wt.%, or between 30 wt.% and 83 wt.%, or between 35 wt.% and 75 wt.%, or between 40 wt.% and 55 wt.%, wherein the nitrate concentration depends on the type of nitrate salt used.

In case an aqueous calcium nitrate solution is used, different concentrations can be applied, preferably ranging between of between 5 and 55 wt.%, or between 40 wt.% and 50 wt.%, such as 40 wt.%, 42 wt.%, 45 wt.%, 47,5 wt.%, 50 wt.%, 51 wt.%, 52 wt.%, 53 wt.%, 54 wt.% or 55 wt.% aqueous calcium nitrate solutions. In a particular method, a 45 wt.% aqueous calcium nitrate solution is used.

In a method according to the present disclosure, the following parameters can be measured in the water body: dissolved oxygen content, nitrate content and/or the temperature of the water body. More in particular, a suited sensor is used to measure the respective parameter, i.e., an oxygen sensor, a nitrate sensor and a temperature sensor (thermometer). The sensors that are typically used in general inherently measure the temperature. One or more of the sensors more specifically operate in a continuous way. Furthermore, one or more of the sensors more in particular are configured to transmit sensed data online. If the dissolved oxygen content and/or the nitrate content drops below a pre-determined critical level as mentioned above, the aqueous nitrate containing liquid is automatically dosed to the water body according to the method as described above. Thereto, one or more of the sensors can be controllable by a control device which is configured to automatically dose the aqueous nitrate containing liquid at the appropriate nitrate supply spot in case the dissolved oxygen content and/or the nitrate content in the water body drops below a pre-determined critical level.

The method according to the present disclosure as described above can on the one hand be used to prevent or reduce fish mortality in the different types of water bodies as described above. Fish rely on oxygen to breathe, just like humans. Without sufficient oxygen, they will not survive. Oxygen also aids in the breakdown of waste produced by fish. Without enough oxygen, the waste can build up and lead to poor water quality and diseases like ammonia poisoning. As already stated above, the method according to the present disclosure utilizes nitrate to reduce oxygen depletion by microorganisms, encouraging them to switch to nitrate respiration. This switch helps more effectively utilize the existing oxygen in the water body for the survival of fish, marking a significant advancement as it directly and promptly improves living conditions for fish and significantly reduces the risk of fish kills.

The method according to the present disclosure can also be used for odour treatment in the different types of water bodies as described above. One source of odours in water bodies is hydrogen sulphide (H₂S) which gives the smell of rotten eggs. It is furthermore remarked that in certain conditions, hydrogen sulphide is also toxic to fish and macro-invertebrates. Hydrogen sulphide occurs as a consequence of the activities of sulphur reducing bacteria in the water body. These sulphur reducing bacteria are able to reduce elemental sulphur (S₀) to H₂S. They use inorganic sulphur compounds as electron acceptors when oxygen is absent. These bacteria feed on small amounts of sulphur in the water body and thus thrive in the low oxygen or anoxic environments present in the water body. A prolonged oxygen-free period and negative redox potential of a water body may potentiate the production of toxic hydrogen sulphide. Furthermore, the temperature significantly impacts the creation of H₂S in water, i.e. the higher the temperature of the water, the more H₂S is produced. Through denitrification or nitrate respiration by the bacteria in the water body, as described above, nitrate is used as an electron acceptor, making conditions unfavourable for the production of H₂S by sulphur-reducing bacteria. These bacteria then utilize nitrate instead of sulphur compounds as an energy source, which reduces the production of hydrogen sulphide.

A system according to the present disclosure relates to the increase of the oxygen level in a water body having a dissolved oxygen content of between 0 mg/l and 4 mg/l, or to anticipate a future drop of a dissolved oxygen content of a water body to a content lower than 4 mg/l, more in particular between 0 mg/l and 4 mg/l, wherein the water body is non-stratified, or is stratified and comprises at least an epilimnion. More in particular, the system relates to the increase of the dissolved oxygen content of a water body having a dissolved oxygen content of between 0 mg/l and 2 mg/l, or to anticipate a future drop of the dissolved oxygen content of a water body to a content of between 0 mg/l and 2 mg/l.

The system according to the present disclosure comprises one or more storage tanks which are configured to hold an aqueous nitrate containing liquid, in the present disclosure called "nitrate storage tanks", and one or more supply tubes which are configured to be connected to the one or more nitrate storage tanks and which are configured to let the aqueous nitrate containing liquid flow from the one or more nitrate storage tanks to an appropriate nitrate supply spot, in the present disclosure called "nitrate supply tubes". In other words, the one or more nitrate supply tubes are in liquid communication with the one or more nitrate storage tanks. To obtain a more precise dosing of the aqueous nitrate containing liquid in the nitrate supply spot, it is possible to connect each of the one or more nitrate supply tubes with an openable and closable valve to the one or more nitrate storage tanks. It is further possible to connect each of the valves with a dosing pump to enable to control the amount of aqueous nitrate containing liquid flowing out of the respective nitrate storage tank and dosed on the respective nitrate supply spot.

The system according to the present disclosure further comprises a dilution system which is configured to take in a dilution liquid from at least one dilution liquid supply and to deliver the dilution liquid to an appropriate dilution spot supply via one or more dilution liquid supply tubes. The dilution liquid more in particular is dilution water, and most in particular water from the water body itself that then will serve as dilution water to dilute the aqueous nitrate containing liquid. The dilution liquid supply tube(s) is (are) consequently in liquid communication with the dilution supply(s).

The system according to the present disclosure also comprises a droplet creating system which is configured to create a stream of diluted aqueous nitrate containing liquid droplets out of a source of liquid, depending on the applied method as described above.

The system according to the present disclosure further can comprise an oxygenation system which is configured to add oxygen to an appropriate liquid at an appropriate oxygenation spot, this in case there is an insufficient amount of dissolved oxygen in the respective liquid. Such an oxygenation system more in particular is an aeration system which comprises one or more air supply tubes which conduct air from an air inlet which is in gas communication with an air supply, more in particular atmospheric aire from the atmosphere, towards an air outlet which is located at an appropriate aeration spot and to eject the (atmospheric) air there. The aeration system can comprise one or more pumps which are configured to pump (atmospheric) air from the air inlet of each of the air supply towards the air outlet of the air supply tubes where it will be injected at the appropriate aeration spot. It is however also possible to use the submersed rotatable impeller / propeller with the plurality of impeller vanes / propeller blades as described above itself. In the latter case, the aeration spot is then located in the vicinity of the impeller vane rear surfaces / propeller blade rear surfaces, through which during the rotational movement of the impeller vanes / propeller blades in the respective liquid, for the reason as already explained above, air, more in particular atmospheric air, is withdrawn from the air supply, more in particular the atmosphere, through the air inlet in the respective air supply tube(s), and through the air outlet in the vicinity of impeller vane rear surfaces / propeller blade rear surfaces at the aeration spot. In case there is turbulence in the water body, which when pump or an impeller / a propeller is used is the case, the water from the water body can mix with air and create air bubbles, thus adding oxygen to the water body.

The system according to the present disclosure finally comprises also a diffusing component which is configured to diffuse and spread the droplets, in case of a non-stratified water body, in a part of the water body or the whole water body, and in case of a stratified water body, in a part of the epilimnion of the water body of the whole epilimnion of the water body. In case an impeller / propeller is used, the diffusing component are the impeller vanes / propeller blades themselves which spread the droplets throughout the water body by the rotation thereof.

The different components of a system according to the present disclosure as described above can be configured in different ways. In the following paragraphs, different possible known aerator systems that are convertable to a system according to the present disclosure which is able to perform a method according to the present disclosure are discussed in more detail. It should be clear that these are only examples of applicable systems which should not be considered as limiting the scope of protection.

Typical aerator systems that can be used as a basis for a system according to the present disclosure which is suitable to perform the method according to the present disclosure are mechanical aeration systems. Mechanical aeration systems in general use rotating shafts and an impeller / propeller with impeller / propeller blades and typically comprise one or more pumps and tubing or a motor which during operation of the system rotates) impeller / propeller with its impeller vanes / propeller blades. Mechanical aeration systems scoop up a liquid such as water and push it out. This churning creates a current in the liquid in which it rotates and thus provides mixing. As the liquid churns, it draws in air, resulting in an oxygenated liquid. The mechanical aeration system mixes the oxygenated liquid with the rest of the liquid and constantly brings in more air to oxygenate. They typically allow for strong localized mixing and high localized dissolved oxygen concentration.

There are currently different types of mechanical aerators available. Surface aerators and subsurface aerators are very suitable to be used in a system according to the present disclosure. Surface aerators are typically used in water treatment processes to increase dissolved oxygen in the water body. It are mechanical devices designed to introduce oxygen into water bodies by agitating the surface, thereby increasing the dissolved oxygen levels. In other words, during operation thereof, surface aerators agitate the water surface, and shear the water into small droplets which are spread in a turbulent plume at several meters per second, thereby creating droplet sprays that are in turbulent contact with the atmospheric air and as such allow oxygen to dissolve into the water of the water body. Unlike surface aerators, subsurface aerators operate underwater, creating either bubbles or a current that facilitates oxygen transfer and water mixing.

Surface aerators can be further classified into different subtypes. The subtypes which are usable to be incorporated in a system according to the present disclosure are
- floating aerators, which float on the water surface of the water body and have a motor that drives an impeller, thereby creating water circulation and oxygen transfer,
- spray or fountain aerators, which propel water into the air (atmosphere), where it falls back into the water body, enhancing oxygen exchange,
- surface jet aerators, which are designed to float on the surface of the water or be mounted just above it.

In a surface aerator, the impeller or propeller draws water from below and expels it at the surface, creating circulation and turbulence that enhances oxygenation. A spray or fountain aerator uses pumps to propel water into the air through nozzles. The water droplets absorb oxygen from the air as they fall back into the water body, increasing the dissolved oxygen content. A surface jet aerator applies jet nozzles that create a high-velocity liquid jet that breaks the surface, introducing air.

Also subsurface aerators can be further classified into different subtypes. The subtypes which are usable to convert in or to incorporated in a system according to the present disclosure are jet aerators, which combine air and liquid through one or more jets and release the liquid and air at high velocities creating underwater turbulence and mixing, thereby promoting oxygenation. A jet aerator combines air and water through a high-velocity jet, typically using a pump. The pump draws in both air and a liquid such as water, mixing them and then releasing the mixture into the liquid to be treated, thereby creating turbulence and oxygenation.

In the following paragraphs, different embodiments of a system according to the present disclosure comprising a type of known mechanical aerator as described above will be discussed in more detail. It is emphasized that these are only exemplary embodiments of systems according to the present disclosure which do not limit the scope of protection of the present disclosure.

A first more specific embodiment of a system according to the present disclosure comprises
- one or more nitrate storage tanks,
- a dilution water supply, more in particular the water body itself,
- a motor, which comprises a rotatable shaft onto which an impeller with a plurality of impeller vanes or a propeller with a plurality of propeller blades is mounted, wherein each impeller vane / propeller blade comprises an impeller vane front surface and an impeller vane rear surface, respectively a propeller blade front surface and a propeller blade rear surface;
- one or more nitrate supply tubes which each are configured to conduct the aqueous nitrate containing solution from a nitrate inlet, which is in liquid communication with the one or more nitrate storage tanks and which is configured to draw in the aqueous nitrate containing liquid out of the respective nitrate storage tank in the respective nitrate supply tube, to a nitrate outlet which is located in the water body in the vicinity of the impeller vane rear surface of the impeller vanes, respectively the propeller blade rear surface of the propeller blades, and is configured to release the aqueous nitrate containing liquid in the vicinity of the impeller vane rear surfaces, respectively the propeller blade rear surfaces,
- in case the impeller / propeller is not located at a position in view of the water surface of the water body to entrain atmospheric air from the atmosphere in the vicinity of the water surface, and/or in case the dissolved oxygen content of the water body is not sufficient as described above, it is possible to provide in an oxygen addition system in the form of one or more air supply tubes which are configured to conduct air between an air inlet which is in gas communication with an air supply, more in particular atmospheric air, and an air outlet which is located in the water body in the vicinity of the impeller vane rear surface of the impeller vanes and is configured to release the air, more in particular the atmospheric air, in the vicinity of the impeller vane rear surface.

During operation of this first optional embodiment of a system according to the present disclosure,
- step a will comprise the following sub steps:
   - due to the creation of a suction side at the height of the impeller vane rear surfaces through the rotation of the impeller in the water of the water body (see also explained above), aqueous nitrate containing liquid is withdrawn out of the one or more nitrate storage tanks, conducted through the respective nitrate supply tube(s) and dosed in the vicinity of the impeller vane rear surfaces, through which the aqueous nitrate containing liquid will be diluted in the water of the water body, thereby obtaining a diluted aqueous nitrate containing liquid, and
   - due to rotation of the impeller / propeller in the water body, simultaneously or overlapping with,
      ∘ in case the impeller is installed in the water body close to the water surface such that during operation of the system atmospheric air can be entrained from the atmosphere above the water surface, and/or in case the water body has a dissolved oxygen content which is heigh enough, as defined above, at least part of the stream of diluted aqueous nitrate containing liquid droplets will entrain air from the atmosphere and/or from the water body, obtaining diluted aqueous nitrate containing liquid droplets of which at least part are oxygenated droplets,
      ∘ in case the impeller / propeller is installed deeper in the water body such that no atmospheric air can be entrained, further due to the creation of the suction side at the height of the impeller vane rear surfaces / propeller blade rear surfaces (see also explained above), air is withdrawn from the air supply, more in particular from the atmosphere, conducted through the respective air supply tube(s) and dosed in the vicinity of the impeller vane rear surfaces, thereby obtaining a stream of air in the water body;
- the rotation of the impeller / propeller will spread the diluted aqueous nitrate containing liquid droplets of which at least part are oxygenated droplets further, in case of a non-stratified water body, in a part of the water body or in the whole water body, and in case of a stratified water body, in a part of the epilimnion of the water body or in the whole epilimnion of the water body (step b).

It is remarked that it also would be possible to dose the aqueous nitrate containing liquid and, if applicable, the (atmospheric) air in the water body in the vicinity of the impeller vane front surfaces / the propeller blade front surfaces. However, in that case, a pump will be necessary to pump the aqueous nitrate containing liquid towards the dosing spot, i.e. in the vicinity of the impeller vane front surfaces / propeller blade front surfaces, and furthermore the rotation speed of the impeller / propeller will have to be higher than in case the dosing of the aqueous nitrate containing liquid, and if applicable, the (atmospheric) air in the water body is done in the vicinity of the impeller vane rear surfaces / the propeller vane rear surfaces, and must be high enough to break the liquid into a stream of droplets.

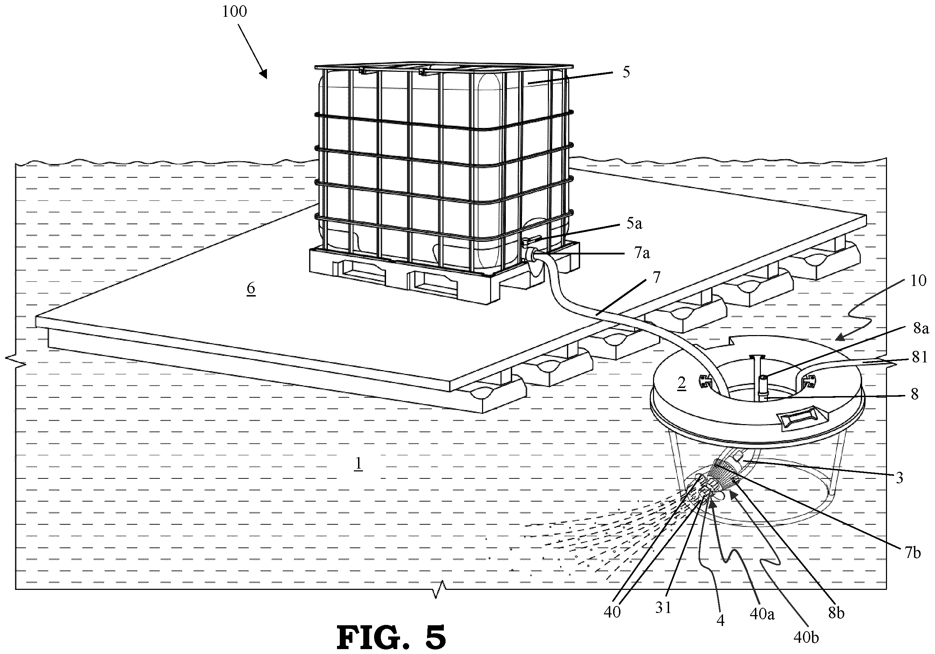

The first embodiment of the system according to the present disclosure as described above can comprises one or more surface aerator systems, wherein a surface aerator system comprise a float which comprises a top part which extends above the water surface and a bottom part which is situated in the water body, and comprises a submersed motor with a shaft onto which an impeller with a plurality of impeller vanes is rotatably mounted, wherein the motor is attached to the float, more in particular to the bottom part thereof. When being installed, the motor with the impeller are located in the water body at a depth below the water surface such that it is not possible to entrain atmospheric air from the atmosphere above the water surface. The surface aerator thus comprises at least one air supply tube which doses air from an air supply, and more in particular atmospheric air, in the vicinity of the impeller vane rear surfaces / impeller blade rear surfaces, or optionally but less favourable the impeller vane front surfaces / impeller blade front surfaces. An exemplary embodiment of such a system is shown in Figure 5 and described in more detail below.

It could also be possible to tie one or more surface aerator systems as described above to a marine vessel, for instance by means of one or more ropes. These one or more floating aerators are then dragged along with the marine vessel when it sails on the water body. In that case, the one or more nitrate storage tanks are placed on the marine vessel. Furthermore, one or more nitrate supply tubes can with their nitrate supply tube inlet be connected to a respective nitrate storage tank and be in fluid communication therewith, and with their nitrate supply tube outlet be situated in the water body in the same way as described above.

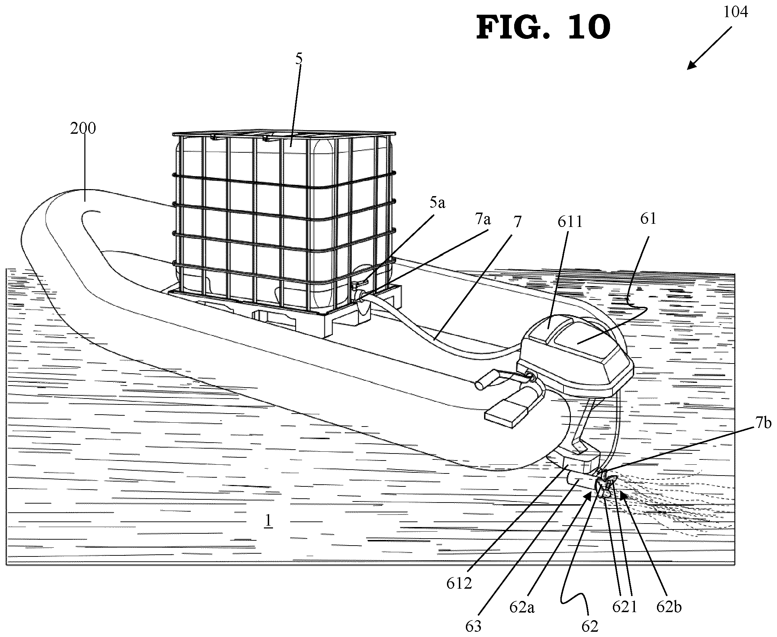

The first optional embodiment of the system according to the present disclosure as described above can also comprise a motorized boat, wherein the motor is submersed and comprises a propeller which is configured to move the boat through the water body. but in this system also is used to withdraw aqueous nitrate containing liquid from one or more nitrate storage tanks, which can be placed on land (on shore) or on the boat (off shore), whereafter it is conducted through one or more nitrate supply tubes and dosed in the water body in the vicinity of the propeller blade rear surfaces, optionally the propeller blade front surfaces, the latter being less favourable. In this system, the propeller is located sufficiently close to the water surface such that air from the atmosphere above the water surface can be entrained in the formed stream of diluted aqueous nitrate containing liquid. An exemplary embodiment of such a system is shown Figure 10 and is described in more detail below with reference to Figure 10.

A second optional embodiment of a system according to the present disclosure comprises
- a dilution liquid supply, more in particular water from the water body itself,
- one or more nitrate storage tanks,
- one or more nitrate supply tubes which each are configured to conduct the aqueous nitrate containing solution from a nitrate inlet, which is in liquid communication with the one or more nitrate storage tanks and which is configured to draw in the aqueous nitrate containing liquid out of the respective nitrate storage tank in the respective supply tube, to a nitrate outlet,
- a spraying system comprising,
   - one or more sprayers which each comprise
      ∘ one or more liquid pipes which each comprise a lower pipe end and an upper pipe end,
      ∘ tubing which is configured to conduct the liquid from the lower pipe end to the upper pipe end, and
      ∘ one or more spraying nozzles or jets located at the upper pipe end;
   - a motor-driven pumping system which is located at the lower pipe end, wherein the pumping system comprises a pump body which comprises one or more liquid pump body intakes comprising
      ∘ one or more nitrate intakes which are in liquid communication with the one or more nitrate supply tubes, and
      ∘ one or more dilution liquid (water) intakes which are in liquid communication with the dilution liquid (water) supply.

During operation of the second optional embodiment of the system according to the present disclosure,
- step a comprises the following sub steps:
   - pumping aqueous nitrate containing liquid using the pumping system out of the storage tank(s) via the one or more nitrate supply tubes through the one or more nitrate intakes in the pump body,
   - simultaneously as, overlapping with, or subsequently to the pumping of aqueous nitrate containing liquid, pumping dilution liquid from the dilution supply, more in particular water from the water body, in the pump body,
   - mixing the dilution liquid, more in particular the water from the water body, and the aqueous nitrate containing liquid in the pump body, resulting in a diluted aqueous nitrate containing liquid present in the pump body,
   - ejecting the diluted aqueous nitrate containing liquid out of the pump in the tubing towards the one or more spraying nozzles or jets, thereby pressurizing the diluted aqueous nitrate containing liquid;
   - spraying of the pressurized diluted aqueous nitrate containing liquid by means of the one or more spraying nozzles or jets up into the atmosphere, wherein during the upward movement the diluted aqueous nitrate containing liquid mixture is broken in a stream of diluted aqueous nitrate containing liquid droplets,
   - due to gravity, falling down of the stream of diluted aqueous nitrate containing liquid droplets towards the water body and finally in the water body,
   wherein during the upward and downward movement of the diluted aqueous nitrate containing liquid droplets, air from the atmosphere is entrained in at least part of the diluted aqueous nitrate containing liquid droplets, resulting in diluted aqueous nitrate containing liquid droplets of which at least a part are oxygenated diluted aqueous nitrate containing liquid droplets,
- further spreading of the diluted aqueous nitrate containing liquid droplets of which at least a part are oxygenated diluted aqueous nitrate containing liquid droplets, in case of a non-stratified water body, in a part of the water body or in the whole water body, and in case of a stratified water body, in a part of the epilimnion of the water body or in the whole epilimnion of the water body (step b).

The second optional embodiment of a system according to the present disclosure as described above can comprise a fountain system which typically comprises a submersible pumping system, more in particular a motor-driven submersible pumping system, configured to draw in water in the pump body and push it through tubing provided in one or more pipes towards one or more spraying nozzles mounted at the end of a respective pipe up into the atmosphere. The pumping system as well as the pipes are typically supported by a floating platform. An anchoring system with anchors and mooring lines keeps the floating platform in its place. A screen or filter is commonly placed over the intake of the pumping system to prevent drawing in debris and aquatic life into the pumping system. Electrical power is provided to the pumping system, often through underwater cables connected to a on-shore based power source. Typically, a control panel located on-shore allows for the operation and the adjustment of the fountain including timer settings, flow control, etc. If necessary, additional aeration components can be included to improve the water quality of the water body by increasing oxygen levels. One or more nitrate supply tubes are attached to the pump body and are configured to dose aqueous nitrate containing liquid from one or more nitrate storage tanks in the pump body.

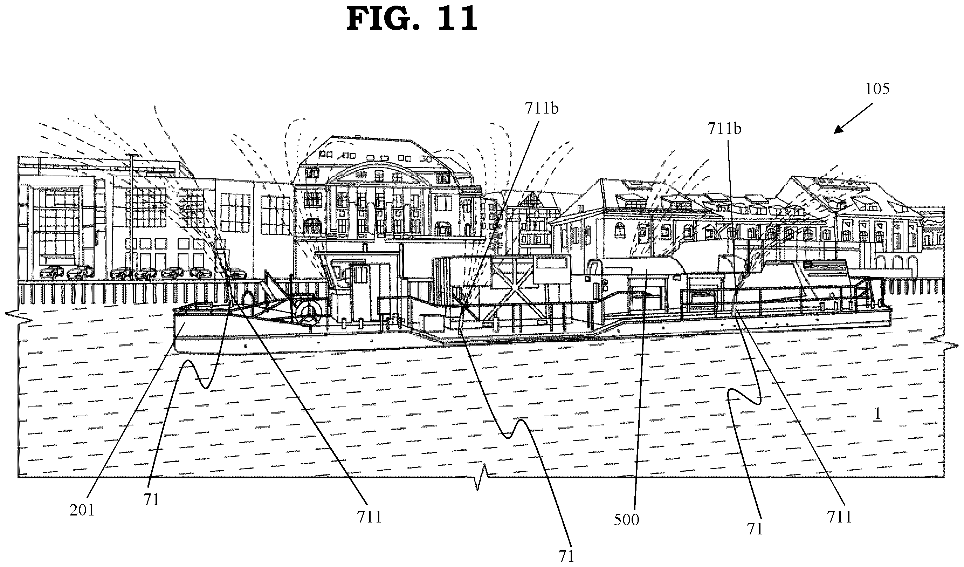

The second optional embodiment of a system according to the present disclosure as described above can also comprise a marine vessel, for instance a ship, onto which a plurality of water cannons are installed. A water cannon typically comprises one or more hollow elongated pipes optionally with internal tubing configured to let a liquid flow through it. Each hollow elongated pipe comprises a pipe inlet and a pipe outlet, and one or more nozzles or jets mounted at the pipe outlet. A water cannon further comprises a motor-driven pumping system comprising one or more pumps which are typically located at the pipe inlet where the dilution liquid, more in particular the water of the water body itself or the water from the one or more storage tanks, enters the water cannon. In this application in which the water cannons are installed on a marine vessel, the pump is typically submersed to be able to draw in water directly from the water body. The motor-driven pumping system generates the pressure necessary to propel the liquid through the hollow elongated pipe or the tubing in the hollow elongated pipe, whichever is applicable, and out of the nozzle(s) or jet(s) of each of the water cannons. The liquid thus enters the pump, where it is pressurized, and is then channelled through the elongated hollow pipe or the tubing inside the elongated hollow pipe, whichever is applicable, towards the one or more nozzles or jets provided at the pipe outlet. In the present disclosure, the liquid is a mixture of dilution water from a dilution water supply, more in particular water from the water body on which the ship sails or possibly one or more dilution water reservoirs provided on the ship, and aqueous nitrate containing liquid from the one or more nitrate storage tanks placed on the ship. Each water cannon is furthermore generally supported and stabilized by a mounting system. The marine vessel comprises a power supply in the form of electricity, batteries or an engine, depending on the design of the marine vessel. Furthermore, one or more pressure gauges are typically provided to allow the operator to monitor and adjust the pressure of the water cannon(s). An exemplary embodiment of a such a system is shown in Figure 11 and described in more detail below with reference to Figure 11. It is remarked that it would also be possible to install the whole system using water cannons on land instead of on a marine vessel. In that case, the nitrate storage tanks are installed on land, as well as the water cannons. It would however also even be possible to place the water cannons in the water body, for instance close to the border of the water body.

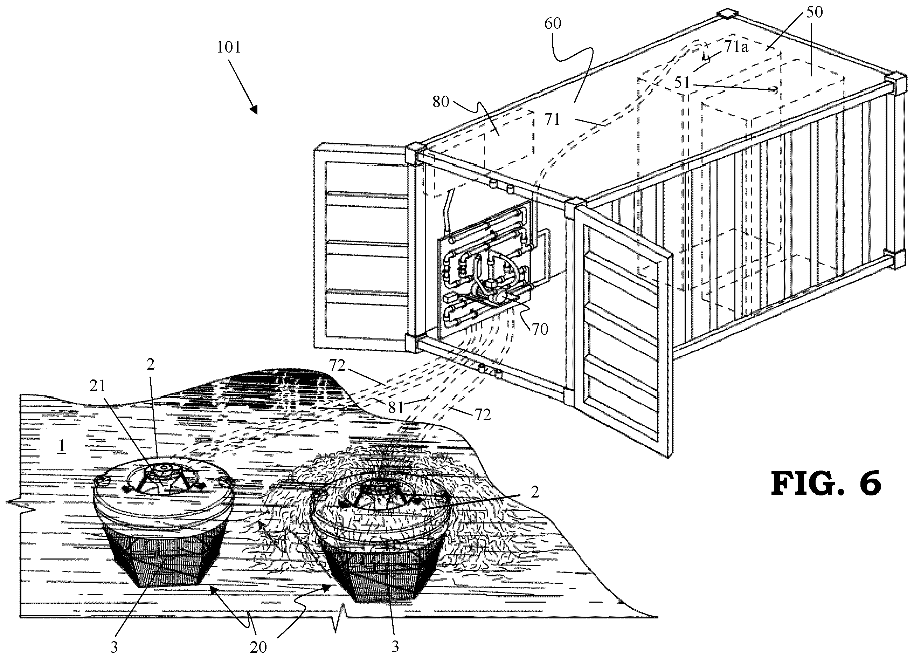

The second optional embodiment of a system according to the present disclosure as described above can also comprise a mushroom-shaped floating surface aerator. It typically comprises a mushroom-shaped float comprising a top part which extends above the water surface of the water body and a bottom part which is located beneath the water surface. This mushroom-shaped floating aerator further comprises a motor which can be located above or beneath the water surface (submersible motor). The motor comprises a shaft onto which a rotatable impeller is installed. The impeller creates a stream of liquid droplets in the atmosphere through rotation thereof with an adequate rotation speed. The system further comprises one or more nitrate supply tubes which are configured to conduct aqueous nitrate containing liquid through it between a nitrate inlet which is in liquid communication with one or more nitrate storage tanks and a nitrate outlet located in the vicinity of the impeller blade rear surfaces, or less favourable in the vicinity of the impeller blade front surfaces. Likewise the first optional embodiment as disclosed above, in case the nitrate outlet is located in the vicinity of the impeller blade rear surfaces, the aqueous nitrate containing liquid is withdrawn out of the one or more nitrate storage tanks through a suction action at the height of the impeller blade rear surfaces due to the rotation of the impeller, and in case the nitrate outlet is located in the vicinity of the impeller blade front surfaces, an additional pump will be necessary to pump the aqueous nitrate containing liquid towards the dosing spot, i.e. in the vicinity of the impeller vane front surfaces. An exemplary embodiment of a such a system is shown in Figure 6 and described in more detail below with reference to Figure 6.

A third optional embodiment of a system according to the present disclosure comprises
- a dilution liquid supply, more in particular water from the water body itself,
- one or more dilution liquid supply tubes, more in particular one or more water supply tubes,
- a dilution liquid pumping system configured to pump dilution liquid from the dilution liquid supply in the dilution liquid supply tube(s), more in particular a water pumping system configured to pump water from the water body in the water supply tube(s),
- one or more nitrate storage tanks,
- one or more nitrate supply tubes which are configured to conduct the aqueous nitrate containing solution from a nitrate inlet of a respective nitrate supply tube(s), which is in liquid communication with the one or more nitrate storage tanks and which is configured to draw in the aqueous nitrate containing liquid out of the respective nitrate storage tank, to a nitrate outlet of the respective nitrate supply tube(s);
- a nitrate pumping system which is configured to pump aqueous nitrate containing liquid from the nitrate storage tank(s) through a respective nitrate storage tank inlet in the respective nitrate supply tube(s),
- an oxygen supply, more in particular atmospheric air or one or more air blowers,
- one or more oxygen supply tubes,
- a submersed jet aerator system comprising,
   - at least one liquid feeding pipe which is in liquid communication with the dilution liquid supply through the one or more dilution liquid supply tubes, more in particular with the water body through the one or more water supply tubes,
   - at least one oxygen feeding line which is in gas communication with the oxygen supply,
   - an oxygen compressor which is configured to deliver compressed oxygen, more in particular compressed atmospheric air, in the oxygen feeding line(s),
   - one or more aeration jets which each comprise an inner nozzle which is arranged in an outer mixing nozzle, wherein the inner nozzle of each of the jets is in liquid communication with the liquid feeding pipe, and wherein the outer mixing nozzle of each of the aeration jets is in gas communication with the oxygen feeding pipe.

The aqueous nitrate containing liquid can be added in different places to the submersed jet aerator system.

In a first option, the one or more nitrate supply tube outlets of the respective nitrate supply tube(s) can be positioned in the dilution liquid supply tube, more in particular in the water supply tube which delivers water from the water body to the pump body inlet of the pumping system. Step a of this first option then comprises the following sub steps:
- pumping dilution liquid from a dilution liquid supply in the one or more dilution liquid supply tubes,
- pumping aqueous nitrate containing liquid with the nitrate pumping system into the dilution liquid present in the dilution liquid supply tube, more in particular in the water of the water body present in the water supply tube, resulting in dilution of the aqueous nitrate containing liquid in the liquid supply tube, more in particular in the water supply tube,
- pumping the diluted aqueous nitrate containing liquid from the dilution liquid supply tube, more in particular the water supply tube, through the pump body inlet in the pump body of the dilution liquid pumping system, more in particular the water pumping system,
- ejecting the diluted aqueous nitrate containing liquid out of the dilution liquid pumping body of the dilution liquid pumping system in the liquid feeding pipe of the submersed jet aerator system, thereby pressurizing the diluted aqueous nitrate containing liquid,
- moving of the pressurized diluted aqueous nitrate containing liquid from the liquid feeding pipe in the inner nozzle of each of the aeration jets,
- spraying the pressurized diluted aqueous nitrate containing liquid from the inner nozzle into the outer mixing nozzle of the one or more aerator jets, obtaining a diluted aqueous nitrate containing liquid stream,
- adding low pressure oxygen in the diluted aqueous nitrate containing liquid stream in the outer mixing nozzle, resulting in shearing of the diluted aqueous nitrate containing liquid into a stream of diluted aqueous nitrate containing liquid droplets, of which at least part are diluted oxygenated aqueous nitrate containing liquid droplets, and
- ejecting a high turbulent jet stream of diluted aqueous nitrate containing liquid droplets of which at least part are diluted oxygenated aqueous nitrate containing liquid droplets out of the one or more aerator jets in the water body.

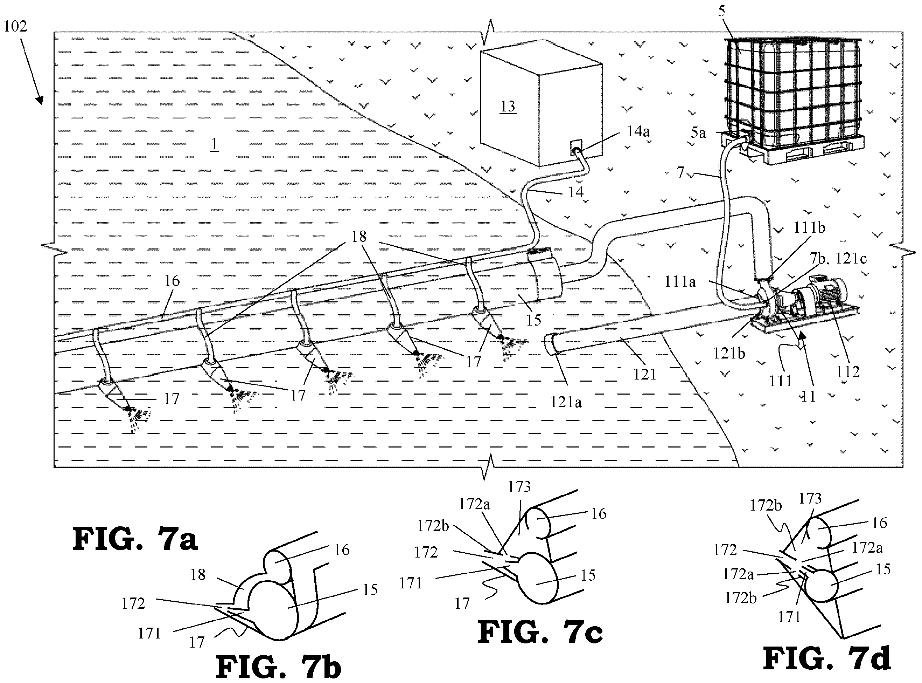

In a second option, the dilution liquid pumping system, more in particular the water pumping system, and the nitrate pumping system are the same. The pumping system comprises a pump body with one or more pump body inlets. The nitrate supply tube outlet of the one or more nitrate supply tubes is in liquid communication with one of the pump body inlets. The dilution supply tube, more in particular the water supply tube, is in liquid communication with the same or another pump body inlet. More in particular, the one or more nitrate supply tubes are connected by means of their respective nitrate supply tube outlets with the respective pump body inlet. Also the one or more dilution liquid supply tubes, more in particular the one or more water supply tubes, are connected to the respective pump body inlet by means of their dilution liquid supply tube outlets. An example of such a system comprising a submersed jet aerator system with a plurality of aeration jets is shown in Figure 7a and described in more detail below. Step a of this third option then comprises the following sub steps:
- pumping dilution liquid from the dilution liquid supply in the dilution liquid supply tube(s), more in particular the water supply tube(s), and further through the respective pump body inlet of the pump body of the pumping system,
- pumping aqueous nitrate containing liquid through the respective nitrate supply inlet(s) in the nitrate supply tube(s), and further through the pump body inlet of the pump body of the pumping system,
   resulting in dilution of the aqueous nitrate containing liquid with the dilution liquid, more in particular the water from the water body, in the pump body of the pumping system, obtaining a diluted aqueous nitrate containing liquid,
- ejecting the dilution liquid out of the pumping body of the pumping system in the liquid feeding pipe of the submersed jet aerator system, thereby pressurizing the diluted aqueous nitrate containing liquid,
- moving of the pressurized diluted aqueous nitrate containing liquid from the liquid feeding pipe in the inner nozzle of the one or more aeration jets,
- spraying the pressurized diluted aqueous nitrate containing liquid from the inner nozzle into the outer mixing nozzle of the one or more aerator jets, obtaining a diluted aqueous nitrate containing liquid stream,
- adding low pressure oxygen in the diluted aqueous nitrate containing liquid stream in the outer mixing nozzle, resulting in shearing of the diluted aqueous nitrate containing liquid into a stream of diluted aqueous nitrate containing liquid droplets, of which at least part are diluted oxygenated aqueous nitrate containing liquid droplets, and
- ejecting a highly turbulent jet stream of diluted aqueous nitrate containing liquid droplets of which at least part are diluted oxygenated aqueous nitrate containing liquid droplets out of the one or more jet aerators in the water body.

In a third option, one or more nitrate supply tube outlets are located in the water body in the vicinity of one or more of the aeration jets, such that during operation of the system, the aqueous nitrate containing liquid is inserted in the water body in the highly turbulent jet stream which is ejected by the respective aeration jet(s). The one or more nitrate supply tubes can more in particular thereto be attached to the respective aerator jet(s). Step a of this second option then comprises the following sub steps:
- pumping dilution liquid from the dilution liquid supply in the dilution liquid supply tube(s), more in particular the water supply tube(s), and further through the pump body inlet of the pump body of the pumping system,
- ejecting the dilution liquid, more in particular the water, out of the pumping body of the pumping system in the liquid feeding pipe of the submersed jet aerator system, thereby pressurizing the dilution liquid, more in particular the water,
- directing the pressurized dilution liquid (water) from the liquid feeding pipe in the inner nozzle of the one or more aeration jets,
- spraying the pressurized dilution liquid (water) from the inner nozzle into the outer mixing nozzle of the one or more aerator jets, obtaining a dilution liquid (water) stream,
- adding low pressure oxygen in the dilution liquid (water) stream in the outer mixing nozzle, resulting in shearing of dilution liquid (water) stream into a stream of dilution liquid (water) droplets of which at least part are oxygenated dilution liquid (water) droplets, and
- ejecting a highly turbulent jet stream of dilution liquid (water) droplets of which at least part are oxygenated dilution liquid (water) droplets, out of the one or more jet aerators in the water body;
- pumping aqueous nitrate containing liquid by means of the nitrate pumping system out of the one or more nitrate storage tanks through the respective nitrate storage tank inlet(s) into the one or more nitrate supply tubes and into the water body in the vicinity of the one or more aeration jets through the respective nitrate supply tube outlet(s), resulting in mixing of the aqueous nitrate containing liquid with the on the one hand the water of the water body through which the aqueous nitrate containing liquid is diluted, obtaining a diluted aqueous nitrate containing liquid, and on the other hand with the highly turbulent jet stream of dilution liquid (water) droplets of which at least part are oxygenated dilution liquid (water) droplets which are ejected by the one or more aeration jets, resulting in the diluted aqueous nitrate containing liquid being converted to a stream of diluted aqueous nitrate containing liquid droplets of which at least part are oxygenated diluted aqueous nitrate containing liquid droplets.

In all of the above options, the diluted aqueous nitrate containing liquid droplets of which at least part are diluted oxygenated aqueous nitrate containing liquid droplets will spread further, in case of a non-stratified water body, in the part of the water body that needs to be treated, i.e. in a part of the water body or in the whole water body, and in case of a stratified water body, in a part of the epilimnion of the water body or in the whole epilimnion of the water body (step b).

In case a water pumping system is used which is configured to pump water out of the water body, this water pumping system can be executed in the form of a recirculation pumping system which is configured to pump water out of the water body, to use it in the submersed jet aerator system and to eject the stream of diluted aqueous nitrate containing liquid droplets of which at least part are diluted oxygenated aqueous nitrate containing liquid droplets back in the water body.

The jet nozzles can be mounted horizontally but can also be mounted at a downward angle, more in particular between 15° and 30°, in view of the water surface of the water body.

In order to increase the efficiency of the submersed jet aeration system, it is possible to arrange the inner and the outer mixing nozzle in "a slotted nozzle configuration", meaning that the outer mixing nozzle comprises one or more air slots in its side wall, in case the nozzle has a circular cross-section, or in one or more of its side walls in case the outer mixing nozzle has for instance a rectangular or square cross-section instead of a circular cross-section. This slotted nozzle configuration, as for instance shown in Figures 7c and 7d and more in detail discussed below, provides in a larger interface for mass transfer in view of the normally configured jet nozzles, as for instance shown in Figure 7a and more in detail discussed below.

Additionally, the submersed jet aerator system as described above can comprise a backwash system. A backwash system sends a water flow in the opposite direction through the inner nozzle, whereby the resulting powerful air/water flow removes all dirt and waste particles from the system.

In a fourth optional embodiment of a system according to the present disclosure, the system comprises
- a dilution liquid supply, more in particular water of the water body itself,
- one or more nitrate storage tanks,
- one or more nitrate supply tubes which are configured to conduct the aqueous nitrate containing solution from a nitrate inlet of a respective nitrate supply tube(s), which is in liquid communication with the one or more nitrate storage tanks and which is configured to draw in the aqueous nitrate containing liquid out of the respective nitrate storage tank, to a nitrate outlet of the respective nitrate supply tube(s);
- a surface jet aerator system, which when mounted comprises
   - a float which comprises a top part which extends above the water surface of the water body and a bottom part which is situated beneath the water surface;
   - a motor comprising a motor body comprising a motor body front end and a motor body back end, wherein the motor is mounted on the float in such a way that the front end of the motor body is situated above the water surface of the water body;
   - a hollow shaft, comprising
      ∘ a hollow shaft back end which is mounted on the motor body front end in an inclined way in view of the water surface of the water body, wherein the hollow shaft back end comprises one or more air inlets,
      ∘ a submersed hollow shaft front end onto which a rotatable impeller with impeller vanes is mounted, each of the impeller vanes having an impeller vane rear surface and an impeller vane front surface, wherein the impeller is rotatable by the motor,
      ∘ one or more nitrate inlets which are in liquid communication with the one or more nitrate outlets of the respective nitrate supply tube(s), wherein the one or more nitrate inlets are located further down towards the hollow shaft front end in view of the one or more air inlets (or of the water surface of the water body),
      ∘ one or more dilution liquid inlets, more in particular water inlets which are configured to let water from the water body in the hollow shaft, wherein the one or more dilution liquid inlets are located further down

towards the hollow shaft front end in view of the one or more air inlets. During operation of this fourth optional embodiment of a system according to the present disclosure,
- step a comprises the following sub steps:
   - rotation of the impeller with its impeller vanes by the motor,
   - due to the rotation of the impeller (as explained above), drawing in of aqueous nitrate containing liquid out of the nitrate storage tank(s) through the one or more nitrate supply tubes in the hollow shaft,
   - furthermore due to the rotation of the impeller (as explained above), drawing in of dilution liquid, more in particular water of the water body, in the hollow shaft through the one or more water inlets,
   - mixing of the dilution liquid, more in particular the water of the water body, with the aqueous nitrate containing liquid in the hollow shaft, wherein the water of the water body will dilute the aqueous nitrate containing liquid obtaining in a diluted aqueous nitrate containing liquid,
   - simultaneously as, overlapping with, or subsequently to the drawing in of dilution liquid in the hollow shaft, drawing in atmospheric air through the one or more air inlets in the hollow shaft,
   - flowing down of the atmospheric air in the hollow shaft towards the hollow shaft front end, thereby meeting at a certain point the diluted aqueous nitrate containing liquid in the hollow shaft, at which point the air is mixed with the diluted aqueous nitrate containing liquid, thereby resulting in at least part of the air being entrained in the diluted aqueous nitrate containing liquid, resulting in a stream of diluted aqueous nitrate containing liquid droplets of which at least part are oxygenated diluted aqueous nitrate containing liquid droplets,
- followed by the further spreading of the stream of diluted aqueous nitrate containing liquid droplets of which at least part are oxygenated diluted aqueous nitrate containing liquid droplets in case of a non-stratified water body, in a part of the water body or in the whole water body, and in case of a stratified water body, in a part of the epilimnion of the water body or in the whole epilimnion of the water body (step b).

It is therewith possible to place the float partly on land and partly in the water body, wherein the float is then positioned in such a way that the submersible hollow part front end is located in the water body. It is however also possible to place the float completely in the water body.

In a fifth optional embodiment of a system according to the present disclosure, the system comprises
- a dilution liquid supply, more in particular water of the water body itself,
- one or more nitrate storage tanks,
- one or more nitrate supply tubes which are configured to conduct the aqueous nitrate containing solution from a nitrate inlet of a respective nitrate supply tube(s), which is in liquid communication with the one or more nitrate storage tanks and which is configured to draw in the aqueous nitrate containing liquid out of the respective nitrate storage tank, to a nitrate outlet of the respective nitrate supply tube(s);
- a horizontal aerator system, comprising
   - a submersed pumping system,
   - a submersed tube arrangement which comprises
      ∘ a plurality of horizontally oriented parallel tubes, wherein a pair of tubes are connected to each other by means of a deflection point,
      ∘ a tube inlet which is in liquid communication with the submersed pumping system, and
      ∘ a tube outlet which is in fluid communication with the water body,
   - one or more ejectors that each comprise in a consecutive order:
      ∘ a nozzle which is in liquid communication with the one or more nitrate outlets of the respective nitrate supply tube(s) and which is configured to draw in aqueous nitrate containing liquid from the one or more storage tanks through the one or more nitrate supply tubes, subsequently to pressurize the aqueous nitrate containing liquid and finally to force the pressurized aqueous nitrate containing liquid through the nozzle, thereby accelerating the speed of the aqueous nitrate containing liquid to a high velocity aqueous nitrate containing liquid jet,
      ∘ a mixing chamber with a mixing chamber air inlet, wherein the mixing chamber is configured to receive the high velocity aqueous nitrate containing liquid jet, and to aspire atmospheric air through the air inlet due to the creation of a low pressure / vacuum in the mixing chamber when the high velocity aqueous nitrate containing liquid enters the mixing chamber,
      ∘ a narrowed section (= throat) which is configured to receive the aqueous nitrate containing liquid and the atmospheric air, both having a high velocity, to subsequently mix the aqueous nitrate containing liquid and the atmospheric air, thereby obtaining a high velocity aerated aqueous nitrate containing liquid, and to subsequently break the aerated aqueous nitrate containing liquid in a stream of aqueous nitrate containing liquid containing droplets of which at least part are oxygenated aqueous nitrate containing liquid containing droplets due to shear forces that are created because of the high velocity aerated aqueous nitrate containing liquid,
      ∘ a diffuser section which is configured to
         ▪ decelerate the velocity of the stream of aqueous nitrate containing liquid containing droplets of which at least part are oxygenated aqueous nitrate containing liquid containing droplets, to partially recover the pressure, and
         ▪ eject and disperse the stream of aqueous nitrate containing liquid containing droplets of which at least part are oxygenated aqueous nitrate containing liquid containing droplets in the water which flows through the tubes of the tube arrangement, thereby resulting in a stream of diluted aqueous nitrate containing liquid droplets of which at least part are oxygenated diluted aqueous nitrate containing liquid droplets.

During the operation of this fifth optional embodiment of a system according to the present disclosure,
- step a comprises:
   - drawing in of dilution liquid from the dilution liquid supply, more in particular water from the water body, by means of the pumping system in the tube inlet of the tube arrangement,
   - drawing in aqueous nitrate containing liquid from the one or more nitrate storage tanks via the one or more nitrate supply tubes in the nozzle of each of the ejectors, thereby creating a high velocity aqueous nitrate containing liquid stream,
   - entering of the high velocity aqueous nitrate containing liquid stream in the mixing chamber of the respective ejector, thereby aspirating atmospheric air through the air inlet in the mixing chamber, resulting in a high velocity atmospheric air stream additional to the high velocity aqueous nitrate containing liquid stream,
   - mixing the high velocity atmospheric air stream with the high velocity aqueous nitrate containing liquid stream, obtaining a high velocity oxygenated stream of aqueous nitrate containing liquid;
   - breaking the high velocity oxygenated stream of aqueous nitrate containing liquid in a stream of oxygenated aqueous nitrate containing droplets of which at least part are aerated aqueous nitrate containing liquid containing droplets,
   - decelerating the velocity of the stream of aqueous nitrate containing liquid containing droplets of which at least part are oxygenated aqueous nitrate containing liquid containing droplets to partially recover the pressure, and to eject and disperse the stream of aqueous nitrate containing liquid containing droplets of which at least part are oxygenated aqueous nitrate containing liquid containing droplets in the dilution liquid, more in particular dilution water, which flows through the tubes of the tube arrangement by means of the diffuser section, thereby resulting in a stream of diluted aqueous nitrate containing liquid droplets of which at least part are oxygenated diluted aqueous nitrate containing liquid droplets,
   - flowing of the stream of diluted aqueous nitrate containing liquid droplets of which at least part are aerated diluted aqueous nitrate containing liquid droplets towards the tube outlet of the tube arrangement,
   - again drawing in dilution liquid from the dilution liquid supply, more in particular water from the water body, in the tube arrangement,
followed by further spreading of the stream of diluted aqueous nitrate containing liquid droplets of which at least part are oxygenated diluted aqueous nitrate containing liquid droplets in the part of the water body that needs treatment, i.e. in a part of the water body or in the whole water body, and in case of a stratified water body, in a part of the epilimnion of the water body or in the whole epilimnion of the water body (step b).

The number of ejectors which add oxygen to the water flow is a determining factor for the effectiveness of the oxygen enrichment of the water body.

In an optional embodiment, one or more dynamic phase separators are provided which when installed are connected at the end of the tube arrangement before the stream of diluted aqueous nitrate containing liquid droplets of which at least part are oxygenated diluted aqueous nitrate containing liquid droplets leaves the tube arrangement via the tube outlet. A dynamic phase separator is configured to separate air and water, which can be necessary should only specific temperature layers of a stratified water body has to be aerated without destroying the temperature stratification of the water body.

In case the system according to the present disclosure uses a marine vessel, an electricity generator can be provided on the marine vessel to supply electricity to all appliances.

In a sixth optional embodiment of a system according to the present disclosure, the system is configured to treat a small water body, where a high pressure water line is available. In the light of the present disclosure, the following natural or artificial water bodies are considered as a small water body:
- ponds which are small, shallow bodies of standing water, often found in gardens, parks, or natural environments,
- streams which are narrow, flowing bodies of water that can be found in both urban and rural areas,
- creeks which are small streams or rivers, often a tributary to a larger river,
- brooks which are small, natural streams, typically smaller than creeks,
- lagoons which are shallow bodies of water separated from a larger body, such as a sea, by a barrier like a sandbar or reef,
- pools which are natural or artificial bodies of water, often found in backyards, resorts, or public facilities.
- springs which are natural sources of water where groundwater emerges at the surface, often forming small pools or streams,
- ditches which are artificial channels created to direct water flow, often found in agricultural or urban areas,
- wells which are deep holes or shafts sunk into the earth to access groundwater, often leading to small collections of water at the surface, and
- wetlands, which are areas where water covers the soil or is present near the surface, including marshes, swamps, and bogs.
   Such a system comprises
- a tap water supply as dilution liquid supply which is used as a dilution liquid source to dilute the aqueous nitrate containing liquid"
- one or more water supply tubes which are in liquid communication with the high-pressure tap water supply,
- one or more nitrate storage tanks,
- one or more nitrate supply tubes which are configured to conduct the aqueous nitrate containing solution from a nitrate inlet of a respective nitrate supply tube(s), which is in liquid communication with the one or more nitrate storage tanks and which is configured to draw in the aqueous nitrate containing liquid out of the respective nitrate storage tank, to a nitrate outlet of the respective nitrate supply tube(s) which is (are) in liquid communication with the one or more water supply tubes;
- a proportioner, also known as a foam inducer or a line inducer, which is a fitting which is used to convey water operation on the injector principle (= Venturi effect) (a fitting in the context of conveyance of water is a device used to connect different sections of pipe or tubing to adapt to various shapes and sizes, to control the flow of the water and to regulate the water pressure), and which comprises a narrowed section with a reduced diameter (= constriction), and which is in liquid communication with the tap water supply,
- optionally, an aerator system, which is configured to enhance the mixing of the water body and if necessary, the add oxygen to the water body.

During the operation of this sixth optional embodiment of a system according to the present disclosure,
- step a comprises:
   - injecting dilution water from the tap water supply into the one or more water supply tubes,
   - flowing of the tap water supply through the narrowed section of the proportioner, increasing the velocity of the dilution water, causing a drop in pressure at the narrowest point of the constriction, creating a low-pressure area, essentially a vacuum, at this constriction, at this point drawing in the aqueous nitrate containing liquid out of the one or more storage tanks in the respective water supply tube(s), mixing it with the dilution water in the respective water supply tube(s), thereby resulting in a diluted aqueous nitrate containing liquid
   - at the same time, breaking up the diluted aqueous nitrate containing liquid into a stream of diluted aqueous nitrate containing liquid droplets because of the increased velocity in the narrowed section of the respective water supply tube(s),
   - in case the dissolved oxygen content in the small water body is high enough, i.e. higher than 4 mg/l, taking up oxygen in the stream of diluted aqueous nitrate containing liquid droplets, resulting in a stream of diluted aqueous nitrate containing liquid droplets of which at least part are oxygenated diluted aqueous nitrate containing liquid droplets, and in case the dissolved oxygen content in the small water body is not high enough, adding oxygen to the stream of diluted aqueous nitrate containing liquid droplets using the one or more additional aerator systems, thereby resulting in a stream of diluted aqueous nitrate containing liquid droplets of which at least part are oxygenated diluted aqueous nitrate containing liquid droplets.
- followed by further spreading of the stream of diluted aqueous nitrate containing liquid droplets of which at least part are oxygenated diluted aqueous nitrate containing liquid droplets in the part of the water body that needs treatment (step b).

As already mentioned above, depending on the type of system according to the present disclosure, the one or more nitrate storage tanks can be placed off-shore as well as on-shore. In case the nitrate storage tank(s) is (are) placed on- shore, the one or more nitrate supply tubes are typically routed along the power supply of the one or more aerator systems that are situated on and/or in the water body. In case the nitrate storage tank(s) is (are) placed off-shore, the nitrate storage tanks(s) can for instance be placed on a pontoon floating on the water body or on a marine vessel. The use of a floating pontoon onto which the nitrate storage tanks(s) is (are) placed, as for instance applied in the exemplary embodiment of a system according to the present disclosure as shown in Figure 5 and described in more detail below, is advantageous in that way that there is no need of long hose connections to transport the aqueous nitrate containing liquid out of the one or more nitrate storage tanks to the one or more mechanical aerator systems. The exact placement of the one or more nitrate storage tanks, whether directly on the water body or off-shore, or placed on land or on-shore, and whether or not being connected to the dilution system(s) via a long hose, is not decisive. It is the position of the mechanical aerator system(s) in the water body which is important to allow optimal distribution of the aqueous nitrate containing liquid and the oxygen originating from air in the water body or oxygen added to the water body. When a system according to the present disclosure needs to be installed in a permanent plant, the system can be installed on land. A part of the system can even be placed underground, as illustrated in the exemplary embodiment of a system according to the present disclosure as shown in Figure 6 and described in more detail below. The one or more nitrate storage tanks can then be positioned on-shore, and more in particular in a (closable) container, from where the aqueous nitrate containing liquid out of the nitrate storage tanks is transported via one or more nitrate supply tubes in the form of pipes or hoses to the aerator system(s) present in the water body.

The present disclosure will now be described in more detail with reference to a number of examples of systems according to the present disclosure. It should be clear that these are only examples and are not limitative to the scope of the present disclosure.

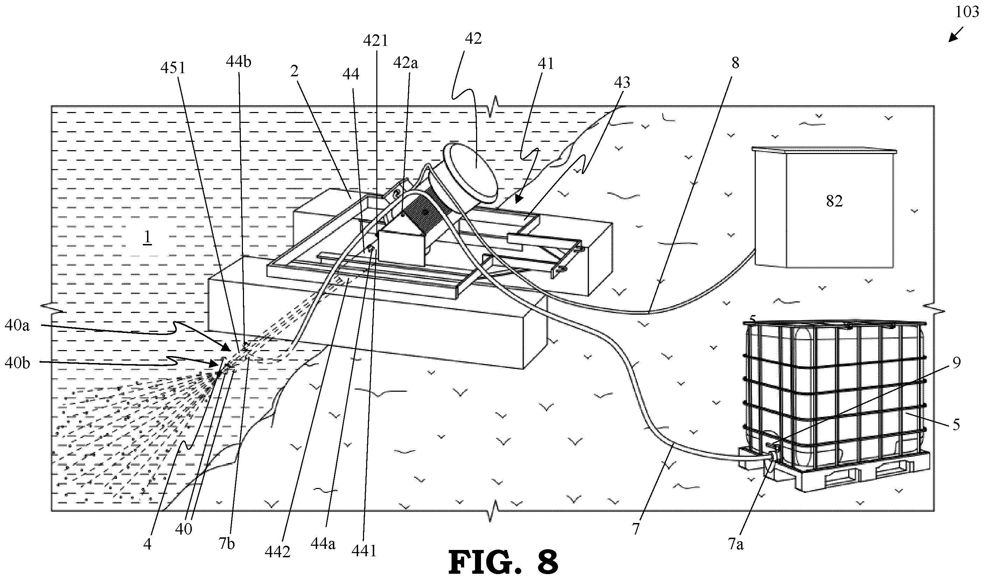

In Figure 5, an example of a system (100) according to the present disclosure using a Turbo-Jet aerator of the German company Linn is shown, wherein the Turbo-Jet aerator is an example of a floating surface aerator. As can be seen in figure 5, the Turbo-Jet aerator (10) comprises a float (2), which has a top part which extends above the water surface of the water body (1) and a bottom part which is submersed. A motor (3) is mounted to the bottom part of the float (2). The motor (3) is consequently also submersed. The motor (3) comprises a shaft (31) onto which an impeller (4) with impeller vanes (40) is mounted. The motor (3) is an electric motor which receives the electricity to drive the impeller (4) from an electricity supply (not visible in Figure 5) via an electricity supply tube (power cable) (81), and is configured to rotate the impeller vanes (40) at a high speed in the water of the water body (1). The impeller vanes (40) thus rotate together with the motor shaft (31) and convert the mechanical energy into pump output power. The impeller vanes (40) withdraw (or suck in) fluids, i.e. liquids or gases, and impel them out at the other side of the Turbo-Jet aerator (10). The Turbo-Jet aerator (10) typically has a motor rating in the range of between 0.35 and 1.1 kW. When the impeller vanes (40) cut into the water of the water body (1), at a relatively high speed, a pressure side at the impeller vane front surfaces (40a) and a suction side at the impeller vane back surfaces (40b) is created. The system (100) as shown in Figure 5 further comprises a nitrate storage tank (5) in the form of an IBC filled with an aqueous nitrate containing liquid which is placed off-shore, i.e. in the water body (1)) on a floating pontoon (6). It could also be possible to place the nitrate storage tank (5) on-shore (on land) (as for instance shown in Figures 7a and 8). The nitrate storage tank (5) comprises an outlet opening (not visible on Figure 5) through which the aqueous nitrate containing liquid can flow out of the nitrate storage tank (5) in a nitrate supply tube (7), which in its turn connects between the nitrate storage tank (5) with the Turbo-Jet aerator (10). The nitrate supply tube (7) more in particular is connected with its nitrate inlet (7a) via an openable and closable control valve (5a), for instance a ball valve, with the outlet opening of the nitrate storage tank (5) (not visible on Figure 5), such that the outflow of aqueous nitrate containing liquid out of the nitrate storage tank (5) can be controlled. The nitrate outlet (7b) of the nitrate supply tube (7) is placed in the water body (1) in the vicinity of the suction of the impeller (4), or in other words in the vicinity of the impeller vane back surfaces (40b). The Turbo-Jet aerator (1) furthermore comprises an air supply tube (8) which has an air inlet (8a) which is open to the atmosphere and which is able to aspirate air from the atmosphere in the air supply tube (8), and which has an air outlet (8b) which is also placed in the water of the water body (1) in the vicinity of the suction side of the impeller vanes (40) or in other words in the vicinity of the impeller vane back surfaces (40b). As can be seen in Figure 5, the motor (3) with the impeller (4) is directed downward into the water body (1) at an oblique angle in view of the water surface, this to have a thorough mixing in the water body (1) and to prevent the formation of dead spots. During operation of the Turbo-Jet aerator (10), the motor (3) directly drives the impeller (4) with its impeller vanes (40), creating, as already explained above, a suction side at height of the impeller vane back surfaces (40b) and a pressure side at the height of the impeller vane front surfaces (40a). Since the air outlet (8b) is located in the water body (1) at height of the impeller vane back surfaces (40b), atmospheric air will be drawn in in the air inlet (8a), which will be conducted through the air supply tube (8) and will be released in the vicinity of the impeller vane back surfaces (40b) through the air outlet (8b). For the same reason, in case the control valve (5a) is in an open position, aqueous nitrate containing liquid will be withdrawn out of the nitrate storage tank (5) in the nitrate inlet (7a) of the nitrate supply tube (7), which will be conducted through the nitrate supply tube (7) and released in the vicinity of the impeller vane back surfaces (40b) through the nitrate outlet (7b). The aqueous nitrate containing liquid out of the nitrate storage tank (5) will thus be diluted when it enters the water of the water body (1) at the height of the impeller vane back surfaces (40b). The drawn in atmospheric air is taken along with the diluted aqueous nitrate containing liquid over the impeller vane edges towards the pressure side of the impeller vanes (40), or in other words towards the impeller vane front surfaces (40a). Since during this movement the velocity of both the diluted aqueous nitrate containing liquid stream and the atmospheric air stream will increase, the aqueous nitrate containing liquid will be broken up in a stream of diluted aqueous nitrate containing liquid droplets and the atmospheric air will be broken in small bubbles. These small air bubbles are then entrained in at least a part of the diluted aqueous nitrate containing liquid droplets, creating diluted aqueous nitrate containing liquid droplets of which at least a part are oxygenated droplets. The diluted aqueous nitrate containing liquid droplets of which at least a part are oxygenated droplets will then, after having moved further away from the Turbo-Jet aerator (10), spread in the part of the water body (1) of which the dissolved oxygen content needs to be increased to the desired dissolved oxygen content as defined above.

In Figure 6, an example of a system (101) according to the present disclosure using two Aqua Pilz aerators with a submersible motor, also from the German company Linn, is shown. An Aqua Pilz aerator is an example of a fountain-type surface aerator. As can be seen in Figure 6, an Aqua-Pilz aerator (20) comprises a float (2) which has a top part which extends above the water surface of the water body (1) and a bottom part which is situated beneath the water surface of the water body (1), or in other words is submersed. A motor (3) is mounted to the bottom part of the float (2), which is consequently also submersed. The motor (3) comprises a rather short motor axle (shaft) onto which an axial pump impeller (both not visible in figure 5) is mounted. In the container (60), an electricity supply (80) is provided which provides electricity to power each of the motors (3) to drive the impeller vanes of the respective impellers (not visible on Figure 5) of each of the Aqua-Pilz aerators (20) via an electricity supply tube (power cable) (81), which in this embodiment are also placed underground between the container (60) and the water body (1). In the center of the float (2), a water distribution cone (21) comprising a deflector with integral notches (not visible in Figure 6) is provided. Each Aqua-Pilz aerator (20) is further arranged with a submersed propeller (not visible on the drawings) which through its rotational movement directs dilution water from the water body (1) towards the water distribution cone (21). The system (101) as shown in Figure 6 further comprises two nitrate storage tanks (50) filled with an aqueous nitrate containing liquid which is placed on-shore in a container (60). It could however also be possible to provide an IBC filled with aqueous nitrate containing liquid on a floating pontoon, as for instance shown in Figure 5, or to provide such an IBC on-shore, as for instance shown in Figures 7a and 8. The nitrate storage tanks (50) comprise a nitrate storage tank outlet (51) through which the aqueous nitrate containing liquid leaves the respective nitrate storage tank (50). The nitrate outlet (51) of each of the nitrate storage tanks (50) is in liquid communication with a first nitrate supply tube (71) which connects the respective nitrate storage tank (50) to a nitrate pumping system (70). The first nitrate supply tube (71) has a first nitrate tube inlet (71a) which is connected to the respective nitrate storage tank outlet (51) and has first nitrate tube outlet (not shown on Figure 6) which is connected to the pumping system (70) placed in the container (60). The nitrate pumping system (70) comprises two second nitrate supply tubes (72), which in this embodiment are arranged underground between the container (60) and the water body (1), and which connect each of the Aqua-Pilz aerators (20) with the nitrate pumping system (70). Each of the second nitrate supply tubes (72) has a second nitrate tube inlet (not visible on Figure 6) which is connected to pumping system (70) and has a second nitrate tube outlet (not visible on Figure 6) which ends in the centre of a respective Aqua-Pilz aerator (20). The nitrate pumping system (70) is configured to control the amount of aqueous nitrate containing liquid which is pumped out the respective nitrate storage tank (50) towards each of the Aqua Pilz aerators (20) according to the specific need. The second nitrate supply tube (72) is attached to the float (2) (not visible in Figure 6). The second nitrate supply tube outlet is located in the water body (1) at the height of the center of the float (2) of the respective Aqua-Pilz aerator (20), more in particular in the vicinity of the distribution cone (21) thereof (not visible on Figure 6). During operation, as already mentioned above, the impeller of a respective Aqua-Pilz aerator (20) rotates in the water of the water body (1). Simultaneously as, overlapping with or subsequently to the rotation of the impeller, aqueous nitrate containing liquid will be pumped by means of the nitrate pumping system (70) through the respective second nitrate supply tube (72) in the water from the water body (1) at the height of the distribution cone (21), through which the aqueous nitrate containing liquid will be diluted with dilution water from the water body (1) when entering the water of the water body (1), resulting in a diluted aqueous nitrate containing liquid. Through the rotation of the impeller (as already mentioned above), water of the water body (1) together with the diluted aqueous nitrate containing liquid will be directed up towards the distribution cone (21) with the integral notches, which at its turn will dissipate and break up the water of the water body (1) and the diluted aqueous nitrate containing solution into a stream of diluted aqueous nitrate containing droplets. The water distribution cone (21) more in particular directs the water of the water body (1) and the diluted aqueous nitrate containing droplets up in a large fountain ring in the shape a mushroom in the atmosphere. Due to gravity, this stream of water and diluted aqueous nitrate containing droplets will move again towards the water surface of the water body (1) and will finally drop down again in the water of the water body (1). During this up- and downward movement of the water and aqueous nitrate containing liquid droplets in the atmosphere, at least a part of the diluted aqueous nitrate containing droplets will entrain atmospheric air, resulting in diluted aqueous nitrate containing droplets of which at least a part are diluted aqueous nitrate containing oxygenated droplets. The diluted aqueous nitrate containing droplets of which at least part are diluted aqueous nitrate containing droplets will then spread further in the part of the water body (1) that needs to be treated, in that way adding oxygen to that part of the water body (1), finally resulting in an increase of the dissolved oxygen in the water body (1).

In Figure 7a, an example of a system (102) according to the present disclosure which comprises a submersed Jet Aerator system, for instance from the Belgian company Task - Environmental Engineering, the US company Mixing Systems, Inc., or the VARI-CANT^{®} Jet Aeration System from the US company Evoqua Water Technologies LLC, is shown. The system (102) comprises a nitrate storage tank (5), here in the form of an IBC filled with aqueous nitrate containing liquid. The system (102) further comprises a motor-driven pumping system (11) which comprises a pump body (111) with a pump body inlet (1 11a) and a pump body outlet (111b), and a motor (112). In this example, the pumping system (11) is placed on-shore. It is however also possible to submerse the pumping system (11). The nitrate storage tank (5) comprises a nitrate storage tank outlet (not visible on Figure 7a) which is in liquid communication with a nitrate supply tube inlet (not visible on Figure 7a) of a nitrate supply tube (7) which further comprises a nitrate supply tube outlet (7b). The nitrate supply tube outlet (7b) is in communication with In order to control the amount of aqueous nitrate containing liquid flowing out of the nitrate storage tank (5), a control valve (5a), for instance in the form of a ball valve, is placed between the nitrate storage tank outlet and the nitrate supply tube inlet. Also the nitrate tube supply outlet (7a) is in liquid communication with the pump body inlet (111a). The system (102) further comprises a water supply pipe (121) which comprises a water supply pipe inlet (121a) which is in liquid communication with the water body (1), and a water supply pipe outlet (121b) which is in liquid communication with the pump body inlet (111a). The system (102) further comprises a liquid supply pipe (19) which is in liquid communication with the pump body outlet (111b). The system (102) further comprises an air blower (13) and an air supply tube (14) which comprises an air supply tube inlet (14a) with which the air supply tube (14) is connected to the air blower (13) and is in gas communication therewith, and an air supply tube outlet (not shown on Figure 7a). The submersed Jet Aerator system (30) comprises a liquid feeding tube (15) which is in liquid communication with the pump body outlet (112b) via the liquid supply tube (19), and an air feeding pipe (16) which is in gas communication with the air supply tube (14) by means of an air supply tube outlet (not visible on Figure 7a). The submersed Jet Aerator system (30) further comprises a plurality of aeration jets (17) that are mounted in series on the liquid feeding tube (15). The jets (17) are more in particular mounted at an oblique downward angle, more in particular between 15° and 30°, in view of the water surface of the water body (1). As can be seen in Figures 7b and 7c, each of the aeration jets (17) comprises an inner nozzle (171) which is in liquid communication with the liquid feeding tube (15), and an outer mixing nozzle (172) which is in gas communication with the air feeding tube (16). Each inner nozzle (171) is inserted in a respective outer mixing nozzle (172). Each of the aeration jets (17) as shown in Figure 7b comprise an outer mixing nozzle

(172) which is in gas communication with the gas feeding tube (16) via an intermediate gas feeding tube (18). Each of the aeration jets (17) as shown in Figures 7c and 7d comprise a so-called "slotted nozzle configuration", which means that the outer mixing nozzle (172) comprises one or more air slots (172a) in its side wall (172b) (or its side walls if the outer mixing nozzle (172) would for instance have a rectangular or square cross-section instead of a circular cross-section). As can be seen in Figure 7c, the outer mixing nozzle (172) comprises one air slot (172a) it ins side wall (172b), while in Figure 7, the outer mixing nozzle has two such air slots (172a) in its side wall (172b). As can be furthermore seen in Figures 7c and 7d, between the air feeding tube (16) and the outer mixing nozzle (172) of each of the aeration jets (17), an intermediate high shear mixing chamber (173) is provided.

The system (102) according to the present disclosure as shown in Figure 7a operates as follows: when the valve (5a) is in an open position, aqueous nitrate containing liquid is pumped by means of the pumping system (11) out of the nitrate storage tank (5) through nitrate supply tube inlet (14a) in the nitrate supply tube (14) and through the nitrate supply tube outlet (14b) which is connected to the pump body inlet (111a) in the pump body (111). Simultaneously as, overlapping with or subsequently to the pumping of the aqueous nitrate containing liquid, water from the water body (1) is pumped by means of the pumping system (11) through the water supply tube inlet (121a) in the water supply tube (121) and through the water supply tube outlet (121b) which is also connected to the pump body inlet (121a) in the pump body. The aqueous nitrate containing liquid and the water from the water body (1) are mixed in the pump body

(111), obtaining dilution of the aqueous nitrate containing liquid resulting in a diluted aqueous nitrate containing liquid. The diluted aqueous nitrate containing liquid is then pumped through the pump body outlet (111b) in the liquid feeding pipe (15) of the submersed Jet Aerator system (30). Due to the pumping action of the pumping system (11), a high velocity diluted aqueous nitrate containing liquid stream is injected in this liquid feeding pipe (15). The high velocity diluted aqueous nitrate containing liquid stream subsequently enters the inner nozzle (11) of each of the aeration jets (17). Compressed atmospheric air from the air blower (13) is blown with a low pressure through the air supply tube inlet (14a) in the air supply tube (14) and through the air supply tube outlet (14b) in the air feeding tube (16) of the submersed jet aerator system (30) and subsequently towards and in each of the aeration jets (17). In case aeration jets (17) are applied as shown in Figure 7b, the low pressure air flows from the air feeding tube (16) in each intermediate air supply tube (18) towards the respective outer mixing nozzle (172) of each of the aeration jets (17) where the air is cut into air bubbles. The diluted aqueous nitrate containing liquid stream flows from the liquid feeding tube (15) in the inner nozzle (171) of each of the jets (17) and is from there ejected in a respective outer mixing nozzle (172). In these outer mixing nozzles (172), the air bubbles are carried over into the diluted aqueous nitrate containing liquid stream, thereby resulting in a stream of diluted aqueous nitrate containing liquid droplets of which at least part are oxygenated diluted aqueous nitrate containing liquid droplets. In case jets (17) are applied as shown in Figures 7c or 7d, the diluted aqueous nitrate containing liquid is pumped out of the liquid feeding tube (15) in the inner nozzle (171) of a respective jet (17), wherein the diluted aqueous nitrate containing liquid is converted to a high velocity, low pressure diluted aqueous nitrate containing liquid stream. The low pressure air flows diluted aqueous nitrate containing liquid stream present in the outer mixing nozzle (172), resulting in an intense contacting and mixing of the two streams, in its turn resulting in the formation of air bubbles in the diluted aqueous nitrate containing liquid stream. In the three embodiments of a nozzle configuration as shown in Figures 7b, 7c and 7d and as described above, the stream of diluted aqueous nitrate containing liquid droplets of which at least part are oxygenated diluted aqueous nitrate containing liquid droplets is jetted out of the outer mixing nozzle (172) of each of the jets (17) in the water body (1), thereby resulting in a high turbulent plume of diluted aqueous nitrate containing liquid droplets of which at least part are oxygenated diluted aqueous nitrate containing droplets. The high velocity plume of diluted aqueous nitrate containing liquid droplets of which at least a part are oxygenated diluted aquoues nitrate containing liquid droplets will travel horizontally in the water body (1) and will spread further in the part of the water body (1) that needs to be treated before reaching the water surface of the water body (1). The pumping system (11) can be executed in the form of a recirculation pumping system (not shown on Figure 7a) which is configured to pump water out of the water body (1) and use it in the submersed jet aerator system (20), whereafter the recirculation pumping system will eject diluted aqueous nitrate containing liquid droplets of which at least a part are oxygenated diluted aqueous nitrate containing liquid droplets back in the water body (1).

In Figure 8, an example of a system (103) according to the present disclosure is shown which comprises an aspirating aerator, for instance an Oxystar^{®} from the U.S. company Aqua-Aerobic Systems, Inc. As can be seen in Figure 8, such an aspirating aerator (41) comprises a float (2), which in this embodiment partially is placed on land and partially is placed in the water body (1). The aspirating aerator (41) could however also be configured without a float and can be mounted directly to a wall which is in the vicinity of the water body (1) (not shown on Figure 8). The aspirating aerator (41) further comprises a motor (42) which is mounted on the float (2) with a mounting system (43). In order to drive the motor (42), an electricity supply tube (power cable) (8) is provided which is powered by an electricity station (82). The motor (42) comprises a motor body (42a) which comprises a front end (421) onto which a shaft support (44) is mounted. This shaft support (44) comprises a back end (441) and a front end (442). This shaft support (44) supports a hollow shaft (45) which comprises a back end (not shown on Figure 8) which extends in the shaft support (44) and a front end (451) which is situated in an oblique way in view of the water surface in the water body (1). The motor (42) is thus mounted on the float (2) in such a way that the front end (451) of the hollow shaft (45) is located in the water body (1). The back end (441) of the hollow shaft (44) which is located above the surface of the water body (1) comprises one or more air inlets (44a). On the front end (451) of the hollow shaft (45), an impeller (4) with impeller vanes (40) is rotatably mounted. The impeller (4) is rotated by the motor (42). Each of the impeller vanes (40) have an impeller vane rear surface side and an impeller vane front surface side (not shown on Figure 8). The shaft support (44) and the hollow shaft (45) further comprise a nitrate inlet (40b) which is connected with an aqueous nitrate containing liquid outlet (7b), hereafter called "nitrate outlet (7b)" of an aqueous nitrate containing liquid supply tube (7), hereafter called "nitrate supply tube (7)" which at its turn is connected with an aqueous nitrate containing liquid inlet (7a), hereafter called "nitrate inlet (7a)" to the IBC (5). The hollow shaft (45) further comprises a water inlet (40b) which is located further down the front end (442) of the hollow shaft in view of the air inlet (44a). The water inlet (44b) is configured to direct water from the water body (1) in the hollow shaft (45). The water inlet (44b) can be in direct contact with the water from the water body (1). It is also possible to connect a first end of a water supply tube (not shown on Figure 8) to the water inlet (44b) and to locate the second end of the water supply tube in the water body (1). It would also be possible to connect the second end of the water supply tube to a tap water supply or one or more water storage tanks (not shown in Figure 8).

During operation of the system, the impeller (4) with the impeller vanes (40) are rotated by the motor (42) in the water of the water body (1), thereby resulting in a suction side (40a) at the impeller vane rear surface of each of the impeller vanes (40), and a pressure side (40b) at the impeller vane front surface of each of the impeller vanes (40). In the vicinity of the suction side (40a) of each of the impeller vanes (40), due to the reduced pressure at the suction side (40a) of the impeller vanes (40), at the front end (442) of the hollow shaft (44), aqueous nitrate containing liquid is sucked out of the IBC (5) through the nitrate supply tube (7) in the hollow shaft (44). Also water is simultaneously sucked in through the water inlet (44b) in the hollow shaft (44). The water and the aqueous nitrate containing liquid mix in the hollow shaft (44), thereby resulting in a diluted aqueous nitrate containing liquid. Furthermore, due to the reduced pressure at the suction side (40a) of each of the impeller vanes (40) due to the rotation thereof, at the back end (441) of the hollow shaft (44), atmospheric air is aspirated in through the air inlet (44a) in the hollow shaft (44). The sucked in air then further flows down in the hollow shaft (44) towards the front end (442) thereof, where at a certain point it meets the diluted aqueous nitrate containing liquid. At that point, the air is mixed with the diluted aqueous nitrate containing liquid through which the diluted aqueous nitrate containing liquid entrains at least part of the air, resulting in an aerated diluted aqueous nitrate containing liquid. Due to the rotational movement of the impeller vanes (40) in the water of the water body (1), the aerated diluted aqueous nitrate containing liquid is sucked out of the hollow tube (1) in the water of the water body (1) at the suction side (40a) of each of the impeller vanes (40). The aerated diluted aqueous nitrate containing liquid is subsequently directed to the centre of the impeller (4), followed by the impeller vanes (40) pushing the aerated diluted aqueous nitrate containing liquid outward from the centre towards the periphery of the impeller (4), followed by the aerated diluted aqueous nitrate containing liquid moving over the surfaces of the rotating impeller vanes (40) which will guide and accelerate the aerated diluted aqueous nitrate containing liquid radially outward, thus increasing the velocity of the aerated diluted aqueous nitrate containing liquid. The motor (42) is dimensioned in such a way to increase the velocity of the impeller (4) and consequently the impeller vanes (40), and consequently also the velocity of the aerated diluted aqueous nitrate containing liquid such that the aerated diluted aqueous nitrate containing liquid is broken up in a stream of droplets of which at least a part are oxygenated droplets. This stream of droplets of which at least part are oxygenated droplets spread further, in the part of the water body (1) that needs to be treated.

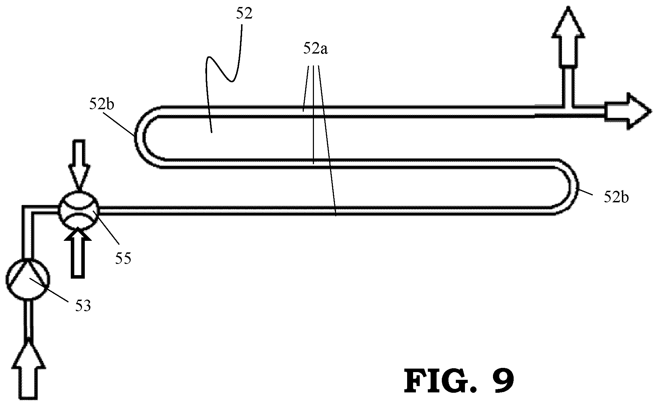

In Figure 9, a JETLIM^{®} system (51) (DPMA Marke: Registernummer 302017031709) applicable to another example of a system according to the present disclosure is shown. Such a JETLIM^{®} system (51) comprises a tube arrangement (52) comprising a plurality of horizontally oriented tubes (52a) which are connected to each other with different turning points, more in particular in the shape of bowed tubes (52b). A pumping system (53) is provided near a tube inlet (521) of the tube arrangement (52). The JETLIM^{®} system further comprises one or more ejectors (55) which are configured to add atmospheric air as well as aqueous nitrate containing liquid to the water flowing through the tubes (52a). The tube arrangement (52) further comprises a tube outlet (522). During operation of the system, water from the water body (1) is pumped through the tube inlet (521) in the tube arrangement (52) by means of the pumping system (53). The pumping system (53) more in particular is dimensioned to move 10 to 30 cubic meters of fluid (water plus aqueous nitrate containing liquid plus air) per hour through the tubes (52a) which have a diameter of around 5 cm. Atmospheric air and aqueous nitrate containing liquid are added to the circulating water in the tubes (52a) via the ejector (55). In this way, a stream of diluted aqueous nitrate containing liquid droplets of which at least part are oxygenated diluted aqueous nitrate containing liquid droplets are formed in the tube arrangement (52) between the one or more ejectors (55) where this stream is created towards the tube outlet (522). The stream of diluted aqueous nitrate containing liquid droplets of which at least part are oxygenated diluted aqueous nitrate containing liquid droplets is subsequently entered through the tube outlet (522) into the water of the part of the water body (1) that needs treatment, resulting in further spreading of this stream of diluted aqueous nitrate containing liquid droplets of which at least part are oxygenated diluted aqueous nitrate containing liquid droplets in that part of the water body (1). The total length of the tubes is determinant for the effectiveness of the JETLIM^{®} aerator system (51). More in particular, a minimum length of 5 to 10 meters is required to ensure adequate contact time between the air and water for sufficient oxygen dissolution. Typically, the total length of the tubes of the tube arrangement (52) is between 30 and 40 meters. To create sufficient turbulence and enhance the mixing of the diluted aqueous nitrate containing liquid, the water and the air in the tubes (52a) to obtain maximum oxygen saturation in the resulting oxygenated diluted aqueous nitrate containing liquid, three to four turning points (52b) are provided. The specifications of the flow rate, the tube length, and the tube diameter can be variable and be adapted to different operational needs. When a lower throughput of oxygenated diluted aqueous nitrate containing liquid is necessary, the tube diameter needs to be smaller to ensure effective mixing and aeration. The JETLIM^{®} aerator system (51) is submersed during operation.

In Figure 10, a system (104) according to the present disclosure is shown which comprises a marine vessel, here in the form of a motorized boat (200). On the motorized boat (200), a nitrate storage tank in the form of an IBC (5) which is filled with an aqueous nitrate containing liquid is installed. In case a larger marine vessel is applied, one or more nitrate storage tanks can be provided on the marine vessel (not shown in Figure 10). A nitrate supply tube (7) with a nitrate supply tube inlet (7a) is connected to an outlet opening (not visible on Figure 10) of the IBC (5). The outlet opening of the IBC (5) is configured to let aqueous nitrate containing liquid flow out of the IBC (5) in the nitrate supply tube (7) through its nitrate supply tube inlet (7a). The nitrate supply tube (7) more in particular is connected by means of a nitrate supply tube inlet (7a) thereof via an openable and closable control valve (5a), for instance a ball valve, with the storage tank outlet, such that the outflow of aqueous nitrate containing liquid out of the nitrate storage tank (5) can be controlled. The motorized boat (200) further comprises a motor (61) which comprises a first motor part (611) which extends above the water surface of the water body (1) and a second motor part (612) which is submersed when installed. The motor (61) comprises a shaft (63) onto which a propeller (62) is mounted. When installed, the propeller (62) is submersed close to the water surface of the water body (1). The propeller (62) is mounted on the shaft (63) of the motor (61). This propeller (62) comprises a plurality of propeller blades (621) which define a periphery of the propeller (62). Each of the propeller blades comprise a propeller blade back surface and a propeller blade front surface. As already explained above, during rotation of the propeller (62) in the water of the water body (1), a suction side (62a) is created at the height of the propeller blade back surfaces of each of the propeller blades (621), and a pressure side (62b) is created at the height of the propeller blade front surfaces of each of the propeller blades (621). The nitrate supply tube (7) has a nitrate supply tube outlet (7b) which, when installed, is located in the water body (1) in the vicinity of the suction side (62a) of each of the propeller blades (62). During operation of the system (104), due to the reduced pressure at the suction side (62a) of the propeller blades (621), aqueous nitrate containing liquid is drawn out of the IBC (5) in the nitrate supply tube (7) through the nitrate supply tube oulet (7b) in the water body (1) at the height of the suction side (62a) of each of the propeller blades (621). The aqueous nitrate containing liquid will at that spot be diluted in the water of the water body (1), thereby obtaining a diluted aqueous nitrate containing liquid. Due to the rotational movement of the propeller blades (621), the diluted aqueous nitrate containing liquid present at the suction side (62a) of each of the propeller blades (621) is directed towards the centre of the propeller (62) and is subsequently pushed out by the propeller blades (621) from the centre towards the periphery of the propeller blades (621). The diluted aqueous nitrate containing liquid subsequently moves over the surfaces of the rotating propeller blades (621) which will guide and accelerate the diluted aqueous nitrate containing liquid radially outward, thus increasing the velocity of the diluted aqueous nitrate containing liquid. The motor (61) is dimensioned to increase the velocity of propeller blades (621) and consequently the velocity of the diluted aqueous nitrate containing liquid such that the diluted aqueous nitrate containing liquid is broken up in a stream of diluted aqueous nitrate containing liquid droplets. At least part of the stream of diluted aqueous nitrate containing liquid droplets will entrain air from just above the water surface of the water body (1), thereby obtaining stream of diluted aqueous nitrate containing liquid droplets of which at least part are oxygenated stream of diluted aqueous nitrate containing liquid droplets. The stream of diluted aqueous nitrate containing liquid droplets of which at least part are oxygenated stream of diluted aqueous nitrate containing liquid droplets will subsequently further spread in the part of the water body (1) that needs to be treated.

In Figure 11, a system (105) according to the present disclosure is shown which comprises a marine vessel, here in the form of a ship (201), and a multitude of water cannons (71) installed on the ship (20). A water cannon is defined as a device that shoots a high-velocity stream of water and typically can deliver a large volume of water, often over quite some meters. On the ship (201), furthermore a nitrate storage tank (500) which is filled with an aqueous nitrate containing liquid is placed. The nitrate storage tank (500) has an outflow opening (not visible on Figure 11) which is configured to let aqueous nitrate containing liquid flow out of it in one or more nitrate supply tubes (not shown on Figure 11). It would be possible to provide an openable and closable control valve on the nitrate storage tank outlet (not shown on Figure 11) to control the outflow of aqueous nitrate containing liquid of the nitrate storage tank (200) in the nitrate supply tube(s). It would however also be possible to install one or more nitrate storage tanks in the hull of the ship (201) (not shown in Figure 11). Each water cannon (71) comprises a hollow elongated pipe (711) which is configured to let a fluid flow through it. Optionally, the hollow elongated pipe (711) comprises internal tubing which is configured to let the fluid flow through it. Each hollow elongated pipe (711) is oriented in an upwards direction and more in particular in an oblique way in view of the water surface of the water body (1) onto which the ship (20) sails. Each elongated pipe (711) comprises a pipe inlet and a pipe outlet (711b) which is provided with one or more spraying nozzles or jets (not shown in Figure 11). Each of the hollow elongated pipes (711) of the water cannon(s) (71) are in liquid communication with on the one hand the one or more nitrate supplying tubes, more in particular with the nitrate supply tube outlet(s), and on the other hand a dilution liquid supply which can be the water body (1) itself but can also be in the form of one or more water storage tanks (not shown on Figure 11) which are provided on the ship (201), the first option be most favourable. A pumping system (not shown on Figure 11) is provided to pump the dilution liquid, more in particular the dilution water, out of the dilution liquid supply, more in particular the water body (1) itself or the one or more water storage tanks towards the pipe inlet of each of the hollow pipes (711) of the water cannons (71). In case water from the water body (1) is used as dilution water to dilute the aqueous nitrate containing liquid, the pumping system is more in particular submersed. The same or a different pumping system (not shown on Figure 11) is provided to pump the aqueous nitrate containing liquid, simultaneously as, overlapping with or subsequently to the pumping of the dilution liquid (water), out of the nitrate storage tank (500) through the respective nitrate supply tube(s) towards pipe inlet of each of the hollow pipes (711). The dilution liquid, more in particular the dilution water, and the aqueous nitrate containing liquid is mixed after having entered the respective hollow pipe (711), thereby obtaining a diluted aqueous nitrate containing liquid. The pumping action of the pumping system(s) will direct the diluted aqueous nitrate containing liquid towards and through the nozzle(s) or j et(s) installed at the pipe outlet (711b) of the respective pipe (711) of each of the water cannons (71). The diluted aqueous nitrate containing liquid will thus be sprayed into the atmosphere by means of the nozzle(s) or j et(s), thereby breaking the diluted aqueous nitrate containing liquid in a stream of diluted aqueous nitrate containing liquid droplets. These stream of diluted aqueous nitrate containing liquid droplets will subsequently move down towards the water body (1) due to gravity to finally end in the water body (1). During the movement of the stream of diluted aqueous nitrate containing liquid droplets through the atmosphere, atmospheric air is entrained in at least a part of the stream of diluted aqueous nitrate containing liquid droplets droplets, thereby obtaining a stream of diluted aqueous nitrate containing liquid containing droplets of which at least a part are oxygenated diluted aqueous nitrate containing liquid droplets. The diluted aqueous nitrate containing liquid droplets of which at least a part are oxygenated diluted aqueous nitrate containing liquid droplets will spread further in the part of the water body (1) that needs treatment. The system as shown in Figure 11 and discussed in more detail with reference to Figure 11 above is typically applied to treat longer rivers and canals since the marine vessel with the system sails on the water body to be treated.

The present disclosure will now further be described in more detail referring to a number of treatments of lakes using a system and a method according to the present disclosure. It should be clear that these are only examples and are not limitative to the scope of the present disclosure.

### Example 1

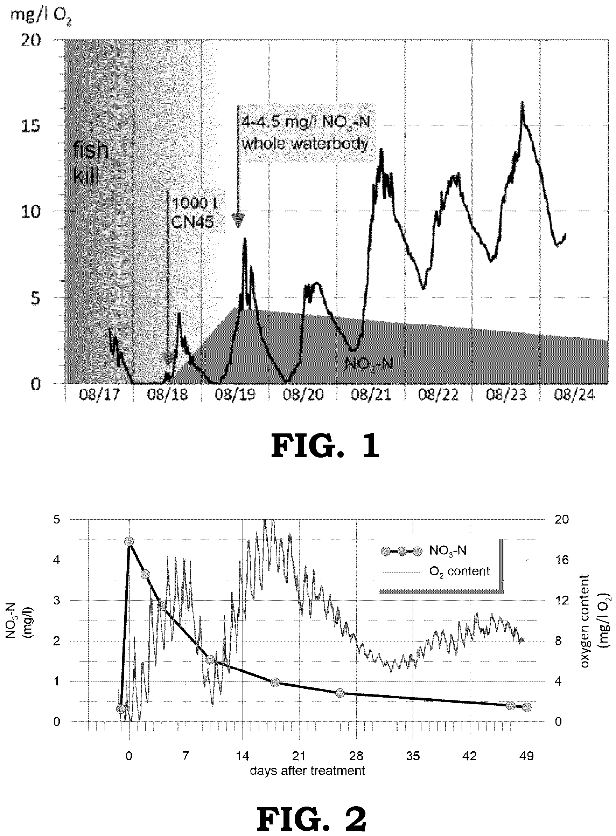

Around 14^{th} and 15^{th} August 2022, the lake Klötzbecken in Berlin, Reinickendorf (Germany) suffered from a massive fish kill. This lake has a surface area of around 1.6 hectare and a volume of about 25.000 m³, Therefore, on 18 August 2022, the lake was treated with 1000 liter of a 45 wt.% of aqueous calcium nitrate solution during a period of 24 hours. The aqueous calcium nitrate solution was dosed once in the lake from a nearly middle point of the lake with a Turbo-Jet aerator as shown in Figure 5 and as described in more detail above. The lake was further oxygenated by means of the Turbo-Jet aerator during a period of one week. As can be seen in Figure 1, before the treatment of the lake, i.e. on 17 August 2022, there was no nitrate present in the water. After the simultaneous injection of a 45 wt.% aqueous calcium nitrate solution and oxygen by means of the Turbo-Jet aerator in the water body, on 19 August 2022, an end concentration of 4.5 mg/l nitrate (NO₃-N) in the whole water body of the lake was obtained. The result of this treatment of the lake was that the fish killed stopped after 1 day. As can be seen in Figure 1, the first days after treatment of the lake, the nitrate concentration increased and the fish critical oxygen concentration was quickly reached and even exceeded. Thereafter, the nitrate concentration decreased again. It can be seen that, although the nitrate concentrate lowers again in the weeks after the treatment, the oxygen amount stabilized, even after 49 days. The nitrate concentration increased only in the first few days and had its effect. It can thus be concluded that the nitrate helps to stabilize the oxygen present in the water body. As can be seen in Figure 2, the oxygen level in the lake Klötzbecken was initially at zero. As already mentioned above, an aqueous nitrate containing solution was dosed to 4.5 mg/litre on day zero. After the dosage, the oxygen levels immediately increased. As further can be seen in Figure 2, the nitrate levels decreased over time, remaining around 1 mg/liter up to 14 days after dosing. The oxygen level reached saturation and even supersaturation levels. It can consequently concluded out of Figures 1 and 2 that the dosing of aqueous calcium nitrate solution significantly increased the oxygen levels in the lake Klötzbecken, indicating that the procedure effectively enhances oxygenation in the water.

### Example 2

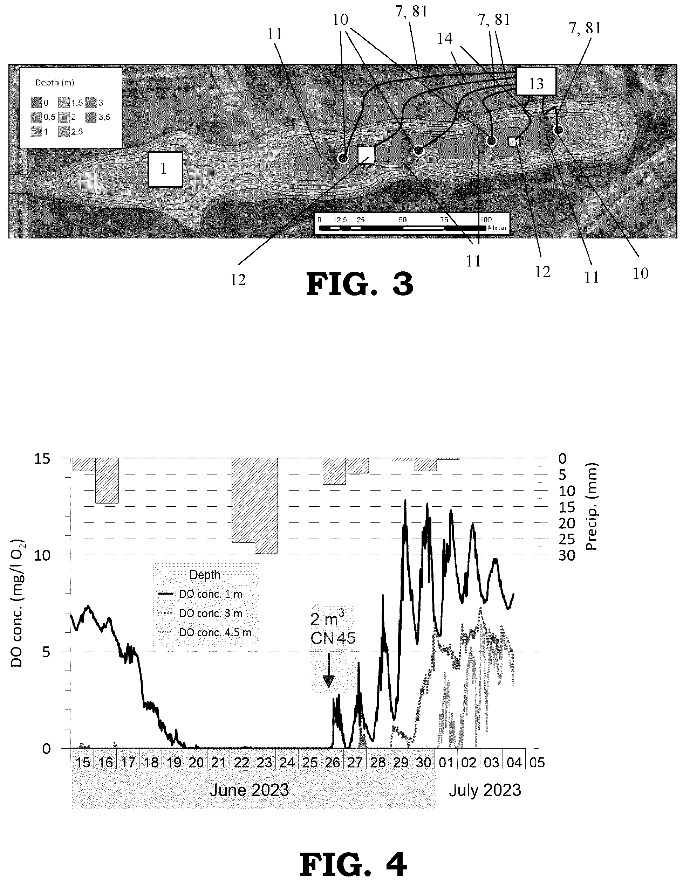

Fennsee is a non-stratified lake (= water body) and has a relatively shallow depth of approximately 3 to 3.5 meters. For already centuries, Fennsee yearly suffered from odour problems. In summertime of 2024, as can be seen in Figure 3, in this lake (1), four Turbo-Jet aerators (10) as shown in Figure 5 and as described in more detail with reference to Figure 5 above, were strategically positioned within the lake (1) to ensure that the aqueous nitrate containing liquid dispersed effectively throughout the lake (1), in order to maintain consistent water quality across various points in the lake (1). As indicated in Figure 3, each of the Turbo-Jet aerators (10) creates a directional flow (11) of the stream of droplets with at least part thereof being oxygenated droplets in the lake (1). The dissolved oxygen content in the lake (1), the temperature of the lake (1), the nitrate levels in the lake (1) as well as the redox potential of the lake (1), which are crucial parameters representing water quality, were constantly monitored by different sensors that were mounted on a floating measurement pontoon (12) in the water body (1). When the redox potential of the lake became negative, or when the oxygen level was decreasing and/or dropped below 2 mg/l O₂, a 45 weight% aqueous calcium nitrate solution (= aqueous nitrate containing liquid) was dosed into the lake to prevent anoxia. Additionally, weather forecasts were closely monitored since rainfall can lead to rapid decreases in oxygen levels due to inflows from rainwater. The Turbo-Jets aerators were utilized to counteract these effects by ensuring rapid dispersion of the 45 wt.% aqueous calcium nitrate solution during such events, thus maintaining the necessary oxygenation of the lake (1). As can be further seen in Figure 3, a land-based control station in the form of a container (13) is provided which houses storage tanks for holding 45 weight % aqueous calcium nitrate solution. An example of such a container (13) is shown in Figure 6 and described in more detail with reference to Figure 6 above. This control station (13) manages the remote control of the dosing of the 45 weight % aqueous calcium nitrate solution in the lake (1) based on sensor data obtained from different sensors that are mounted on a measurement pontoon (12) as described before, deciding when and how much 45 weight % aqueous calcium nitrate solution has to be dosed into the lake (1). Additionally, a number of cables and hoses are provided which includes power cables (81) for the Turbo-Jet aerators (10), data transmission cables from the measurement pontoons (12), and a hose (nitrate supply tube) (7) for dosing the 45 wt.% aqueous calcium nitrate solution into the lake (1).

### Example 3

In June 2023, a critical fish-kill was observed in the Schäfersee, located in Berlin-Reinickendorf. The lake spans an area of 4 hectares and is situated within a 240-hectare catchment area, from which rainwater drainage significantly impacts its ecological balance. Lake Schäfersee is thermally stratified in the summer months. The epilimnion extends from 0 to approximately 3.5 m. The hypolimnion below 4.5 meters is clearly separated by the thermal stratification. Following a period of heavy rainfall on June 15th and 16th, the lake experienced a pronounced oxygen depletion across its water column, particularly in the epilimnion. More in particular, after several days of rain, the oxygen level dropped to 0 mg/liter at 1 meter depth. This environmental stress, compounded by additional heavy rainfall totalling 25 to 30 millimetres on June 22nd and 23rd, led to a critical drop in oxygen levels, resulting in fish mortality. To address the urgent need for oxygenation and nitrate distribution within the lake, an AquaPilz aerator from Linn, Germany was deployed. An example of such an AquaPilz aerator is shown in Figure 6 and described in more detail with reference to Figure 6 above. This AquaPilz aerator pumps water from depths of 3 to 4 meters from the lake to the surface and disperses it in a circular pattern with a radius of 2 to 3 meters. Measurable improvements in oxygen levels were observed within a few hours of the intervention, during which 2 cubic meters of 45 weight % aqueous calcium nitrate solution, were diluted in the lake within 2 hours, with measurements reaching up to 3 milligrams dissolved oxygen per liter during the day. Although oxygen levels dropped to zero on the first night immediately after the intervention, a clear recovery was observed in the following days. Oxygen levels rose steadily, reaching concentrations of over 10 milligrams per litre during the day and remaining at a minimum of 5 milligrams per liter at a depth of 1 meter at night. Remarkably, this positive trend continued at greater depths, with oxygen levels stabilizing at 5 milligrams per litre by July 1 at a depth of 3 meters and even becoming detectable at 4.5 meters. Due to the targeted nitrate distribution and the simultaneous aeration of the water body, further fish die-offs were successfully prevented, significantly improving the lake's ecological conditions. As can be seen in Figure 4, the oxygen levels increased to up to 10 mg/litre at 1 meter depth within 5 days. Oxygen levels at depths of 3 and 4.5 meters increased to up to 5 mg/litre within 7 days. This figure shows that the procedure is effective in counteracting fish die-offs and rapidly increasing oxygen levels in the water, even under adverse weather conditions.

## Claims

1. A method to increase the dissolved oxygen content in a water body having a dissolved oxygen content of between 0 mg/l and 4 mg/l, or to anticipate a future drop of a dissolved oxygen content of a water body to between 0 mg/l and 4 mg/l, wherein the water body is non-stratified, or is stratified and comprises at least an epilimnion, wherein the method comprises the following steps:
- step a, wherein a stream of diluted aqueous nitrate containing liquid droplets of which at least part are diluted oxygenated aqueous nitrate containing liquid droplets are formed, and
- step b, wherein the diluted aqueous nitrate containing liquid droplets of which at least part are oxygenated diluted aqueous nitrate containing liquid droplets are spread, in case of a non-stratified water body, in a part of the water body or in the whole water body, and in case of a stratified water body, in a part of the epilimnion of the water body or in the whole epilimnion of the water body,
wherein the aqueous nitrate containing liquid more in particular is chosen from aqueous calcium, sodium, potassium, ammonium, magnesium or barium nitrate solution, or any combination thereof

2. A method according to claim 1, wherein step a comprises the following sub steps:
- diluting an aqueous nitrate containing liquid with a dilution liquid, thereby forming a diluted aqueous nitrate containing liquid;
- converting the diluted aqueous nitrate containing liquid into a stream of diluted aqueous nitrate containing liquid droplets, and
- optionally adding oxygen to the stream of diluted aqueous nitrate containing liquid droplets, thereby forming a stream of diluted aqueous nitrate containing liquid droplets of which at least part are oxygenated diluted aqueous nitrate containing liquid droplets.

3. A method according to claim 1, wherein step a comprises the following sub steps:
- converting an aqueous nitrate containing liquid into a stream of aqueous nitrate containing liquid droplets;
- diluting the stream of aqueous nitrate containing liquid droplets with a dilution liquid, thereby forming a stream of diluted aqueous nitrate containing liquid droplets;
- optionally adding oxygen to the stream of diluted aqueous nitrate containing liquid droplets, thereby forming diluted aqueous nitrate containing liquid droplets of which at least part are oxygenated diluted aqueous nitrate containing liquid droplets.

4. A method according to claim 1, wherein step a comprises the following sub steps:
- diluting an aqueous nitrate containing liquid with a dilution liquid and simultaneously adding oxygen, forming an oxygenated diluted aqueous nitrate containing liquid,
- converting the oxygenated diluted aqueous nitrate containing liquid into a stream of diluted aqueous nitrate containing liquid droplets of which at least a part are oxygenated diluted aqueous nitrate containing liquid droplets.

5. A method according to claim 1, wherein step a comprises the following sub steps:
- adding oxygen to a dilution liquid, forming oxygenated dilution liquid,
- converting the oxygenated dilution water into a stream of dilution water droplets of which at least part are oxygenated dilution water droplets,
- adding aqueous nitrate containing liquid to the stream of dilution water droplets and oxygenated dilution water droplets, thereby forming a stream of diluted aqueous nitrate containing liquid droplets of which at least part are oxygenated diluted aqueous nitrate containing liquid droplets.

6. A method according to claim 1, wherein step a comprises the following sub steps:
- converting a dilution liquid to a stream of dilution liquid droplets;
- adding aqueous nitrate containing liquid and simultaneously adding oxygen to the stream of dilution liquid droplets, forming a stream of diluted aqueous nitrate containing liquid droplets of which at least part are oxygenated diluted aqueous nitrate containing liquid droplets.

7. A method according to any one of claims 2 to 6, wherein the dilution liquid is water from the water body.

8. A method according to any one of claims 2 to 7, wherein the conversion of a respective liquid into a stream of liquid droplets is done by increasing the velocity of the respective liquid to such a speed that the stream of liquid droplets is formed.

9. A method according to claim 8, wherein the velocity of the respective liquid is increased by passing the liquid through a nozzle or jet which subsequently ejects the stream of liquid droplets.

10. A method according to claim 9, wherein the water body has a water surface, and wherein the at least one nozzle or jet is placed
- above the water surface oriented in
• an upward direction, more in particular an oblique upward direction, in view of the water surface, wherein during the operation of the system, the respective liquid enters the nozzle or jet which subsequently ejects a stream of liquid droplets up into the atmosphere, more in particular in a direction which is the same as the direction in which the at least one nozzle or jet is oriented, whereafter the droplets drop down towards the water surface and finally end in the water body because of gravity, or
• a downward direction, more in particular an oblique downward direction, in view of the water surface, wherein during operation of the system, the respective liquid enters the nozzle or jet which subsequently ejects a stream of liquid droplets in the atmosphere towards the water surface, more in particular in a direction which is the same as the direction in which the at least one nozzle or jet is oriented, and finally ends in the water body,
wherein during the movement of the liquid droplets through the atmosphere at least part of these entrain atmospheric air thus resulting in liquid droplets of which at least part are oxygenated liquid droplets; or
- below the water surface oriented in a downward direction, more in particular an oblique downward direction, wherein during operation of the system the respective liquid enters the nozzle or jet which subsequently ejects a stream of liquid droplets in a downward direction, more in particular in the same direction as the direction in which the at least one nozzle or jet is oriented, in the water body, wherein
• in case the oxygen activity of the biogenic or other natural sources in the water body is sufficient to provide in a dissolved oxygen content in the water body of more than 4 mg/l water, at least part of the stream of liquid droplets are oxygenated liquid droplets, and
• in case the oxygen activity of the biogenic or other natural sources in the water body is insufficient to provide in a dissolved oxygen content in the water body of more than 4 mg/l water, additional oxygen is added to the stream of liquid droplets, thereby forming a stream of liquid droplets of which at least part are oxygenated liquid droplets.

11. A method according to any one of claims 1 to 10, wherein the velocity of the respective liquid is increased by passing the respective liquid through an impeller or a propeller with a plurality of impeller vanes each comprising an impeller / propeller blade face and an impeller / propeller blade back, wherein the impeller vanes / propeller blades during operation of the system are rotated by a motor thereby exercising a positive pressure on the impeller blade face of each of the impeller vanes creating a pressure side, through which a negative pressure is obtained on the impeller / propeller blade back of each of the impeller vanes / propeller blades creating a suction side, wherein at the pressure side the respective liquid is broken up in the stream of liquid droplets, wherein the motor more in particular has an axle onto which the impeller / propeller is mounted, wherein the water body has a water surface, and wherein the impeller with the impeller vanes more in particular is submersed in the water body
- either close to the water surface thereby creating liquid droplets in the water body close to the water surface of which at least part entrain atmospheric air from the atmosphere present above the water surface in the vicinity thereof, or
- at a depth in the water body where the droplets created in the water body are not able to entrain atmospheric air, wherein
• in case the oxygen activity of the biogenic or other natural sources in the water body is sufficient to provide in a dissolved oxygen content in the water body of more than 4 mg/l water, at least part of the liquid droplets entrain dissolved oxygen from the water body, and
• in case the oxygen input from biogenic or other natural sources in the water body results in an dissolved oxygen content of the water body of between 0 mg/l and 4 mg/l water, oxygen is added to the respective liquid,
resulting in a stream of liquid droplets of which at least part are oxygenated liquid droplets.

12. A method according to any one of claims 2 to 11, wherein the oxygen is added to a respective liquid by adding atmospheric air to it.

13. A method according to claim 11 and 12, wherein the atmospheric is added to the respective liquid by placing an atmospheric air supply tube comprising an atmospheric air inlet in the atmosphere, and comprising an atmospheric air outlet at the suction side of the impeller / propeller, wherein during operation of the system atmospheric air is sucked in the atmospheric air supply tube through the atmospheric inlet and is ejected out of the atmospheric air supply tube through the atmospheric outlet in the water body at the suction side of the impeller / propeller .

14. A method according to any one of the preceding claims, wherein the method is to increase the dissolved oxygen content of a water body having an dissolved oxygen content of between 0 mg/l and 2 mg/l, or to anticipate a future drop of the dissolved oxygen content of a water body to an dissolved oxygen content of between 0 mg/l and 2 mg/l.

15. System to increase the oxygen level in a water body having an dissolved oxygen content of between 0 mg/l and 4 mg/l, or to anticipate a future drop of an dissolved oxygen content of a water body to a content of between 0 mg/l and 4 mg/l, more in particular to increase the dissolved oxygen content of a water body having an dissolved oxygen content of between 0 mg/l and 2 mg/l, or to anticipate a future drop of the dissolved oxygen content of a water body to a content of between 0 mg/l and 2 mg/l, wherein the water body is non-stratified, or stratified and comprises at least an epilimnion, when mounted, comprising
- at least one nitrate storage tank configured to hold an aqueous nitrate containing liquid,
- at least one nitrate supply tube which is in liquid communication with the nitrate storage tank, more in particular by means of an openable and closable valve, wherein the valve more in particular is connected to a dosing pump which is configured to control the amount of aqueous nitrate containing liquid flowing out of the nitrate storage tank(s) if the valve is in an open position, wherein the at least one nitrate supply tube is configured to supply the aqueous nitrate containing liquid to an appropriate nitrate supply spot,
- a dilution system which is configured to take in dilution water and to deliver the dilution water to an appropriate dilution spot,
- a liquid droplet creating system which is configured to create a stream of liquid droplets out of a respective liquid,
- optionally, an aeration system which is configured to add oxygen to an appropriate liquid at an appropriate aeration spot by aeration of the liquid with atmospheric air, the aeration system more in particular comprising one or more air supply tubes each comprising an air inlet which is configured to suck in atmospheric air, and an air outlet which is configured to be located at an appropriate aeration spot and to eject the atmospheric air at the appropriate aeration spot, and wherein the aeration system more in particular comprises
• one or more pumps which are configured to pump atmospheric air in the air inlet of each of the air supply tubes and to pump the atmospheric air out of the air outlet of the air supply tubes at the appropriate aeration spot, or
• the submersed rotatable impeller comprising the plurality of impeller vanes, wherein the aeration spot is located at the suction side of the impeller vanes, and wherein during the rotational movement of the rotator blades in the appropriate liquid, atmospheric air is sucked in the air inlet of each of the air supply tubes and is ejected out of the outlet inlet of each of the air supply tubes at the suction side of the impeller vanes.
- a diffusing component which is configured to diffuse and spread the droplets, in case of a non-stratified water body, in a part of the water body or the whole water body, and in case of a stratified water body, in a part of the epilimnion of the water body of the whole epilimnion of the water body,
wherein the liquid droplet creating system more in particular is configured to increase the velocity in the respective liquid, and more in particular comprises
- one or more nozzles or jets which are configured to pass the liquid through it and to eject the liquid in the form of a stream of liquid droplets, wherein the ejection of the liquid out of the nozzle(s) or jet(s) increases the velocity of the liquid resulting in the breaking of the liquid into liquid droplets, or
- a submersed impeller / propeller which is rotatable by a motor and which comprises a plurality of impeller vanes / propeller blades which each comprise an impeller / propeller blade face and an impeller / propeller blade back, wherein during operation of the system, the impeller vanes / propeller blades rotate in the liquid obtaining a positive pressure on the impeller / propeller blade face of each of the impeller vanes / propeller blades creating a pressure side, and obtaining a negative pressure on the impeller vane rear surface of each of the impeller vanes / propeller blades creating a suction side, wherein at the pressure side, through which the velocity of the liquid is increased since it is sucked from the pressure side to the suction side of the impeller vanes / propeller blades resulting in the breaking of the liquid in the stream of liquid droplets.
wherein the system optionally comprises
- a nitrate sensor to measure the nitrate concentration in the water body, and/or
- an oxygen sensor to measure the oxygen concentration in the water body, and/or
- a temperature sensor to measure the temperature of the water body,
wherein more in particular one or more of the sensors are controllable by a control device which is configured to automatically add the aqueous nitrate containing liquid to the appropriate nitrate supply spot using the at least one nitrate supply tube in case the dissolved oxygen content and/or the nitrate content drops below a pre-determined critical level,
and wherein more in particular one or more of the sensors are configured to work in a continuous way,
and wherein more in particular one or more of the sensors are configured to transmit sensed data online.
